# EUROPÄISCHE PATENTANMELDUNG

(11) **EP 0 228 043 A2**
(43) Veröffentlichungstag der Anmeldung: **08.07.1987**
(21) Anmeldenummer: 86117722.8
(22) Anmeldetag: 19.12.1986
(51) Int. Cl.: C09B 69/06, D01F 6/18, C09B 29/085, C09B 26/04, C09B 33/06, C09B 29/036, C09B 47/26

(54) **Neue Farbsalze, Verfahren zu ihrer Herstellung und ihre Verwendung**

(30) Priorität: 28.12.1985 DE 3546294
(71) Anmelder: HOECHST AKTIENGESELLSCHAFT, 65926 Frankfurt am Main (DE)
(72) Erfinder: Hohmann, Kurt, D-6078 Neu Isenburg (DE); Mischke, Peter, Dr., D-6232 Bad Soden am Taunus (DE); Teige, Wolfgang, D-6233 Kelkheim (DE)

(57) **Zusammenfassung**

Farbsalz eines mono- oder polykationischen Farbstoffes mit dem Anion entsprechend einer allgemeinen Formel (1) oder (2)
[Me (XCN)₄]²⁽⁻⁾ (1)
[Me (SCN)₆]ⁿ⁽⁻⁾ (2)
in welchen
Me in Formel (1) das zweiwertige Zink-Kation, das zweiwertige Eisen-Kation, das zweiwertige Kobalt-Kation, das zweiwertige Zinn-Kation oder das zweiwertige Kupfer-Kation ist und
Me in Formel (2) für das zweiwertige Eisen-Kation, das zweiwertige Nickel-Kation oder das dreiwertige Eisen-Kation steht,
X ein Sauerstoffatom oder ein Schwefelatom ist und
n abhängig von der Wertigkeit des entsprechenden Metall-Kations die Zahl 4 oder 3 bedeutet.

Die neuen Farbsalze können beispielsweise aus wäßriger Lösung oder Suspension durch Umsetzung mit dem entsprechenden kationischen Farbstoff, der ein übliches Anion besitzt, mit einer ein Metallkation Me abgebenden Verbindung und mit einem Alkali-, Erdalkali- oder Ammoniumrhodanid bzw. -cyanat gewonnen werden. Sie dienen insbesondere in der Spinnfärbung von sauer modifiziertem Polyacrylnitril und dessen Mischpolymeren.

## Beschreibung

Die vorliegende Erfindung liegt auf dem Gebiet der basischen Farbstoffe.

Farbstoffe mit einer oder mehreren kationischen Gruppen sollen, damit sie sich für die Spinnfärbung von sauer modifiziertem Polyacrylnitril und sauer modifizierten Mischpolymeren des Acrylnitrils mit anderen Monomeren (im nachfolgenden allgemein als PAC bezeichnet) eignen, beispielsweise eine sehr gute Löslichkeit in den organischen, üblicherweise bei den Spinnfärbeverfahren eingesetzten Solventien verfügen und weiterhin eine möglichst geringe Wasserlöslichkeit besitzen, damit sie aus den Syntheseansätzen möglichst quantitativ und darüberhinaus salzfrei abgeschieden werden können; denn bereits geringe Verunreinigungen an anorganischen Salzen können unerwünschte Verstopfungen und Beschädigungen des Spinndüsensystems verursachen und demgemäß den Einbau zusätzlicher Filtrationsvorrichtungen erforderlich machen. Weiterhin sollen diese Farbstoffsalze über eine einwandfreie Lagerstabilität verfügen, und ihre Löslichkeit darf sich auch bei langer Lagerzeit nicht verschlechtern. Solche Eigenschaften sind nicht nur eine Funktion des Farbstoffkations, sondern werden ganz entscheidend vom Anion des Farbsalzes beeinflußt.

Die aus der Literatur zum Färben von PAC aus wäßrigem Färbebad bekannten kationischen Farbstoffe in Form ihrer Halogenide, Sulfate, Methosulfate, Phosphate, Tetrachlorzinkate oder Acetate erfüllen diese Anforderungen nicht, da sie wegen ihrer guten Wasserlöslichkeit meist nur schwierig und nicht frei von anorganischen Begleitsalzen aus den Syntheseansätzen abgeschieden werden können. Desweiteren ist ihre Löslichkeit in den für Spinnfärbeverfahren von PAC gebräuchlichen organischen Lösemitteln, wie Dimethylform amid, Dimethylacetamid, Dimethylsulfoxid, Diethylcarbonat und Aceton, vielfach zu gering.

Diese Nachteile gelten auch für kationische Farbstoffe mit dem Nitratanion, die in der US-PS 4 100 131 speziell zum Spinnfärben von PAC eingesetzt werden.

Weiterhin werden kationische Farbstoffe mit dem Tetrafluoroborat-Anion als speziell für die Spinnfärbung geeignet beschrieben (s. die britische Patentschrift Nr. 1 514 263 und die europäischen Patentanmeldung-Veröffentlichungen Nrs. 0 055 221 A, 0 055 222 A, 0 055 223 A und 0 055 224 A). Diese Farbstoffsalze haben jedoch den Nachteil, daß das Tetrafluoroborat-Anion instabil ist, weswegen bereits nach Lagerzeiten von wenigen Wochen die Bildung von Fluorwasserstoff beobachtet werden kann; Korrosionen in den Spinnaggregaten sind u.a. die Folge. Die Hydrolyse des Tetrafluoroborat-Anions führt zudem zu einer Abnahme der Löslichkeit der Farbstoffe in den zum Spinnfärben von PAC gebräuchlichen Lösemitteln.

Weiterhin ist mit dem Tabellenbeispiel 46 der US-PS 4 607 071 ein kationischer Farbstoff mit dem Rhadanid-Anion für die Spinnfärbung von PAC beschrieben. Aber auch Farbstoff-Rhodanide sind wegen ihrer teilweise geringen Löslichkeit in den üblichen Solventien, auch in Aceton, nur in eingeschränktem Maße in der Spinnfärbung einsetzbar. Zudem können viele kationische Farbstoffe aus wäßriger Lösung nicht als kristalline Rhodanidsalze oder nur unvollständig abgeschieden werden.

Die oben erwähnten Nachteile kommen noch stärker zum Vorschein bei den an und für sich wertvollen kationischen Farbstoffen mit zwei quartären Gruppen, wie sie beispielsweise aus den US-Patentschriften Nrs. 3 271 383, 3 291 788, 4 607 071 und 4 344 879 bekannt sind. Denn aufgrund ihrer durch zwei kationische Zentren bedingten sehr guten Wasserlöslichkeit ist die salzfreie Abscheidung biskationischer Farbstoffe besonders schwierig, weshalb bisher Ausbeuteverluste und eine aufwendige Abwasserreinigung in Kauf genommen werden mußten.

Es bestand daher die Aufgabe, Farbsalze von kationischen Farbstoffen aufzufinden, die diese Nachteile der bisher bekannten Farbsalze nicht oder in nur geringfügigem Maße besitzen.

Diese Aufgabe wurde mit der vorliegenden Erfindung durch Überführung der Farbstoffe in Farbsalze mit Rhodanometallat- oder Cyanatometallat-Komplexen als Anionen gelöst.

Die vorliegende Erfindung betrifft somit neue Farbsalze von mono- oder polykationischen, wie bis- oder triskationischen, Farbstoffen mit dem Anion entsprechend einer allgemeinen Formel (1) oder (2)
[Me (XCN)₄]²⁽⁻⁾ (1)
[Me (SCN)₆]ⁿ⁽⁻⁾ (2)
in welchen
Me in Formel (1) das zweiwertige Zink-Kation, das zweiwertige Eisen-Kation, das zweiwertige Kobalt-Kation, das zweiwertige Zinn-Kation oder das zweiwertige Kupfer-Kation ist und
Me in Formel (2) für das zweiwertige Eisen-Kation, das zweiwertige Nickel-Kation oder das dreiwertige Eisen-Kation steht,
X für ein Schwefel- oder Sauerstoffatom steht und
n abhängig von der Wertigkeit des entsprechenden Metall-Kations die Zahl 4 oder 3 bedeutet.

Bevorzugt ist hiervon das Tetrarhodano-Zincat-Anion.

Die erfindungsgemäßen, neuen Farbsalze mit den Anionen entsprechend der allgemeinen Formel (1) oder (2) sind fast ausnahmslos feste, in der Regel kristalline Verbindungen, die als solche aus der Synthese leicht zugänglich sind. Sie können mit besonderem Vorteil als in Wasser schwer lösliche, jedoch in den für die Spinnfärbung von PAC üblichen Solventien gut lösliche Farbstoffe zum Färben von PAC in der Spinnfärbung eingesetzt werden.

Die vorliegende Erfindung betrifft ebenso die Herstellung dieser neuen Farbsalze bzw. die Isolierung und Gewinnung von kationischen Farbstoffen in reiner Form durch Überführung in die erfindungsgemäßen Farbsalze. Das Verfahren ist dadurch gekennzeichnet, daß man einen kationischen Farbstoff mit einem üblichen Anion in wäßriger Lösung oder Suspension mit einer Verbindung, die ein Metallkation Me oben definierter Bedeutung abzugeben vermag, und einem Alkalimetall-, Erdalkalimetall- oder Ammoniumrhodanid bzw. Alkalimetall-, Erdalkalimetall oder Ammoniumcyanat, vorzugsweise Natrium-, Kalium- oder Ammoniumrhodanid bzw. -cyanat, bei einer Temperatur zwischen 0°C und 100°C, vorzugsweise zwischen 0°C und 60°C, und bei einem pH-Wert zwischen 2 und 6, vorzugsweise bei einem pH-Wert von 2,5 und 4,5, umsetzt.

Anionen in den Ausgangs-Farbsalzen sind beispielsweise die üblichen Anionen von anorganischen oder organischen Säuren oder üblichen Metallkomplex-Anionen, wie sie insbesondere bei der Synthese der kationischen Farbstoffe oder bei deren Isolierung vorliegen, so die aus der oben erwähnten Literatur erkenntlichen Anionen, wie bspw. die Chlorid-, Sulfat-, Acetat-, Methosulfat-, Nitrat-, Rhodanid-, Cyanat- und Chlorzincat-Anionen.

Verbindungen, die ein Metallkation Me enthalten und abzugeben vermögen, sind insbesondere die üblichen Salze dieser Metalle von anorganischen oder organischen Säuren, wie die Carbonate, Halogenide, Sulfate und Acetate dieser Metalle, oder auch die Oxide und Hydroxide dieser Metalle. Solche Metallkationen abgebenden Verbindungen sind beispielsweise Zinkoxid, Zinkacetat, Zinksulfat, Kupfer(II)-sulfat, Eisen(II)-sulfat, Nickel(II)-sulfat, Kobalt(II)-sulfat, Eisen(III)-chlorid, Eisen(III)-sulfat, Zinn (II)-chlorid, Zinn(II)-sulfat, Eisen(II)-chlorid und Kobalt(II)-sulfat.

Das erfindungsgemäße Verfahren kann besonders vorteilhaft durchgeführt werden, wenn man von kationischen Farbstoffen mit dem Tetrachlorozincat-Anion ausgeht und mit dem Alkalimetall-, Erdalkalimetall- oder Ammoniumrhodanid bzw. -cyanat innerhalb des genannten Temperaturbereiches umsetzt. Hierbei ist es nicht erforderlich, zusätzlich eine das Metallkation abgebende Verbindung in den Reaktionsansatz einzusetzen, da das Tetrachlorozincat-Anion des Ausgangs-Farbsalzes diese Funktion übernimmt. Man kommt hierdurch auf elegante Weise sogleich zum erfindungsgemäßen Farbsalz.

Die neuen Farbsalze lassen sich in der Regel aus den Reaktionsansätzen des erfindungsgemäßen Verfahrens aufgrund ihrer überwiegend sehr geringen Wasserlöslichkeit in hoher Ausbeute abscheiden und nach ihrer Isolierung durch Nachwaschen mit Wasser in nahezu salzfreier Form gewinnen, so daß aufwendige verfahrenstechnische Maßnahmen zur Abtrennung anorganischer Begleitsalze aus den aprotische Lösemittel enthaltenden Spinnflüssigkeiten unterbleiben können.

Als Farbstoffkationen kommen solche von mono-, bis- und polykationischen Farbstoffen in Betracht; sie sind zahlreich in der Literatur beschrieben, bspw. in dem anfangs genannten Stand der Technik, und können den verschiedensten chemischen Farbstoffklassen angehören. Besonders hervorzuheben sind Monoazo-, Disazo- und Polyazofarbstoffe, Methin-, Polymethin-, Azamethin- und Azacyaninfarbstoffe, Diaryl- und Triarylmethanfarbstoffe, Anthrachinonfarbstoffe, Phthalocyaninfarbstoffe, Azin-, Oxazin- und Thiazinfarbstoffe, Naphthostyrylfarbstoffe, Acridin-, Cyanin-, Dioxazin-, Benzothiazinophenoxazin-, Chinophthalon-, Chinacridon- und Xanthenfarbstoffe.

Die kationischen Gruppen in den kationischen Farbstoffen sind quartäre Ammoniumgruppen, die primäre Ammoniumgruppe selbst und protonierte Ammoniumgruppen mit bis zu zwei Substituenten, wobei die Substituenten Alkylgruppen von 1 bis 6 C-Atomen, bevorzugt 1 bis 4 C-Atomen, sind und diese Alkylgruppen substituiert sein können, wie beispielsweise durch Hydroxy, Cyano, Carbamoyl und Phenyl, und wobei einer dieser Substituenten auch ein Phenylrest sein kann.

Die quartären Gruppen des Farbstoffkations können Bestandteil des Chromophors sein, beispielsweise als Substituenten am aromatischen Teil des chromophoren Systems oder in Form von Cyclammoniumstrukturen; die quartären Gruppen sowie die protonierten Ammoniumgruppen können aber auch zusätzlich oder ausschließlich über Seitenketten an das chromophore System gebunden sein. Quartäre Gruppen sind beispielsweise Trialkylammonium-Gruppen mit niederen Alkylresten, die gegebenenfalls substituiert sein können, des weiteren N,N-Dialkyl-N-aryl-ammonium-Gruppen mit gegebenenfalls substituierten niederen Alkylresten, N,N-Dialkyl-N-aralkyl-ammonium-Gruppen mit niederen, gegebenenfalls substituierten Alkylgruppen sowie N-Monoalkyl-N-aryl-N-aralkyl-ammonium-Gruppen mit einer niederen, gegebenenfalls substituierten Alkylgruppe. Diese Ammoniumgruppen können direkt oder über einen gegebenenfalls mit Heteroatomen und/oder kleinen Atomgruppen verbundenen aliphatischen Rest an den aromatischen Teil des chromophoren Systems gebunden sein, wie beispielsweise an einen Benzol- oder Naphthalinkern.

Bevorzugte kationische Farbstoffe sind solche, bei denen die kationischen Ladungen in Form von Cyclammoniumstrukturen Bestandteil des Chromophors sind. Diese quartären Gruppen enthaltenden Cyclammoniumreste sind insbesondere 5- oder 6-gliedrige Ringe, die noch weitere Heteroatome, wie Sauerstoff-, Schwefel- und/oder Stickstoffatome, enthalten können, wobei diese Heterocyclen auch an aromatische, carbocyclische Reste, wie einen Benzolkern oder Naphthalinkern, direkt gebunden oder ankondensiert sein können. Die kationische Ladung der Cyclammoniumstrukturen liegt in delokalisierter Form vor, was durch verschiedene mesomere Grenzstrukturen formelmäßig ausgedrückt werden kann.

Cyclammoniumreste und deren Derivate sind vorzugsweise Pyridinium-, Pyrazolium-, Imidazolium-, Triazolium-, Tetrazolium-, Oxazolium-, Thiazolium-, Oxdiazolium, Thiadiazolium-, Chinolinium-, Indazolium-, Benzimidazolium-, Benzthiazolium-, Benzisothiazolium- oder Benzoxazolium-Strukturen, wobei diese Reste in den Heterocyclen bevorzugt durch niedere, gegebenenfalls substituierte Alkylreste, durch Aralkyl-, Aryl- und/oder Cycloalkyl-Reste substituiert sein können und in den aromatischen carbocyclischen Teilen durch kationische, wie beispielsweise die oben erwähnten, durch basische und/oder nicht-ionogene Gruppen substituiert sein können. Basische Gruppen sind beispielsweise primäre, sekundäre oder tertiäre Aminogruppen, Hydrazino- oder Amidinogruppen, weiterhin heterocyclische, stickstoffhaltige Ringe, wie beispielsweise der Pyridin-, Imidazol-, Morpholin-, Piperidin- oder Piperazin-Ring. Nichtionogene Gruppen sind beispielsweise Halogenatome, wie Chlor- und Bromatome, niedere, gegebenenfalls substitu ierte Alkylgruppen, niedere Alkoxygruppen, die Nitrogruppe, die Carbamoyl- oder Sulfamoylgruppe, eine durch niederes Alkyl, Phenyl und/oder Benzyl substituierte Sulfamoyl- oder Carbamoylgruppe, niedere Alkanoylamino- und niedere Alkylsulfongruppen, die Cyan- und die Trifluormethylgruppe.

Neben den Ammoniumgruppen, die, wie bereits erwähnt, direkt oder über Brückenglieder an den aromatischen Teil des chromophoren Systems gebunden sind, kommen auch stark basische Gruppen, wie beispielsweise primäre, sekundäre oder tertiäre Aminogruppen, Hydrazino- oder Amidinogruppen, in Frage, wobei diese stickstoffhaltigen Gruppen auch Teil eines heterocyclischen Ringes sein können, so beispielsweise des Pyridin-, Imidazol-, Morpholin- Piperidin- oder Piperazinringes. Sekundäre Aminogruppen sind bevorzugt niedere Monoalkylaminogruppen, Phenyl- oder Aralkylaminogruppen, wie beispielsweise die Methylamino-, Ethylamino- oder iso-Propylaminogruppe oder die Phenylamino- oder Benzylaminogruppe. Tertiäre Aminogruppen sind beispielsweise die Dimethylamino-, Diethylamino-, N-Methylanilin- oder N-Methyl-benzylaminogruppe.

Die vorstehend genannten Heteroatome und kleineren Atomgruppen, über die als Brückenglieder die Amino- oder Ammoniumgruppen an das chromophore System gebunden sein können, sind beispielsweise Gruppen der Formel -O- , -NH- , -N(niederes Alkyl)- , -CO- , -SO₂- , -CH₂-, -CH₂-CH₂- , -CH₂CH₂CH₂- , -CH₂CH(OH)CH₂- sowie Kombinationen davon.

Sind in den erfindungsgemäßen Farbstoffen zwei oder mehr quartäre Gruppen enthalten, so können diese zueinander gleich oder voneinander verschieden sein.

Die vorstehenden oder nachfolgenden Bezeichnungen "nieder", "Aryl" etc. haben folgende Bedeutung:

Die Angabe "nieder" bedeutet, daß der in dieser Gruppe oder diesem Rest enthaltene Alkyl- oder Alkylenrest oder Alkenylrest aus 1 bis 4 C-Atomen besteht;
die Angabe "substituierter Alkylrest" bedeutet, daß das Alkyl durch einen oder zwei, bevorzugt einen Substituenten aus der Gruppe Hydroxy, Acetoxy, niederes Alkyloxy, Cyan, niederes Carbalkoxy, Chlor, Phenyl und Carbamoyl substituiert ist, wobei das Phenyl noch durch Halogen, wie Chlor, Brom oder Fluor, niederes Alkyl, niederes Alkoxy, Nitro, Acylamino, Sulfamoyl und/oder Carbamoyl substituiet sein kann und das Carbamoyl noch durch niederes Alkyl, eine Phenylgruppe oder einen Benzylrest mono- oder disubstituiert sein kann, wobei der substituierte Alkylrest beispielsweise eine β-Hydroxyethyl-, β-Cyanethyl-, β-Acetoxyethyl-, γ-Hydroxypropyl-, β-Methoxyethyl-, Benzyl- oder Phenylethylgruppe ist;
die Angabe "Aryl" bedeutet einen Arylrest, insbesondere einen Phenyl- oder Naphthylrest, der noch durch die oben angegebenen basischen, kationischen und/oder nichtionogenen Gruppen substituiert sein kann;
nicht-ionogene Substituenten, von denen bevorzugt 1 bis 3 in dem Arylrest enthalten sein können, sind insbesondere Halogen, wie Chlor oder Brom, niederes Alkyl, wie Methyl oder Ethyl, niederes Alkoxy, wie Methoxy, Ethoxy oder Propoxy, Nitro, niederes Alkylsulfon und Trifluormethyl;
die Angabe "Aralkyl" bedeutet einen niederen Alkylrest, der durch einen Arylrest substituiert ist, wobei der Arylrest die obengenannte Bedeutung hat; bevorzugt ist der Arylrest im "Aralkyl" ein Phenylrest, der durch 1 oder 2 Substituenten aus der Gruppe niederes Alkyl, niederes Alkoxy und Chlor substituiert sein kann;
die Angabe "Cycloalkyl" bedeutet einen Cycloalkylrest von 4 bis 12 C-Atomen, wie der Cyclopentyl- oder Cyclohexylrest, die noch durch 1 bis 3 niedere Alkylgruppen, wie Methylgruppen, substituiert sein können.

Niedere Alkylgruppen (Alkylreste) sind insbesondere die Methyl- und Ethylgruppe, niedere Alkoxygruppen insbesondere die Methoxy- und Ethoxygruppe. Aralkylreste sind insbesondere die Benzyl- und Phenethylgruppe. Niedere, substituierte Alkylreste, die mit dem Alkylrest an ein Stickstoffatom gebunden sind, sind bevorzugt Alkylgruppen von 1 bis 4 C-Atomen, die durch eine Hydroxy-, niedere Alkoxy-, Cyan- oder Phenylgruppe substituiert sind, wie beispielsweise die β-Hydroxyethyl-, β-Cyanethyl-, β-Methoxyethyl-, die Benzyl- oder Phenethylgruppe.

Quartäre Ammoniumgruppen sind bevorzugt die Trimethylammonium-, die Triethylammonium-, die Dimethyl-ethyl-ammonium-, die Benzyl-dimethyl-ammonium- und die Phenyl-dimethylammonium-Gruppe.

Von den erfindungsgemäßen Farbsalzen können beispielsweise solche hervorgehoben werden, deren Farbstoffkationen den allgemeinen Formeln (3) bis (13) entsprechen:
D⁽⁺⁾ ― N = N - K ― 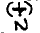 Alk)₃ (3)
D - N = N - K - 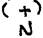 (Alk)₃ (4)
D⁽⁺⁾ ― N = N - K (5)

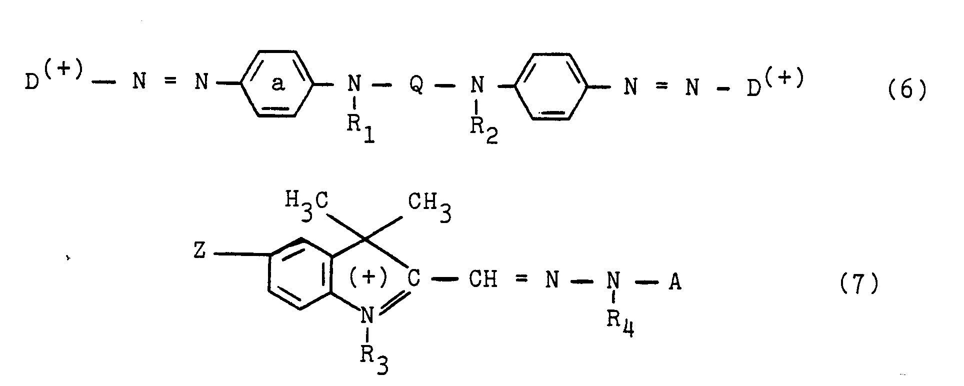

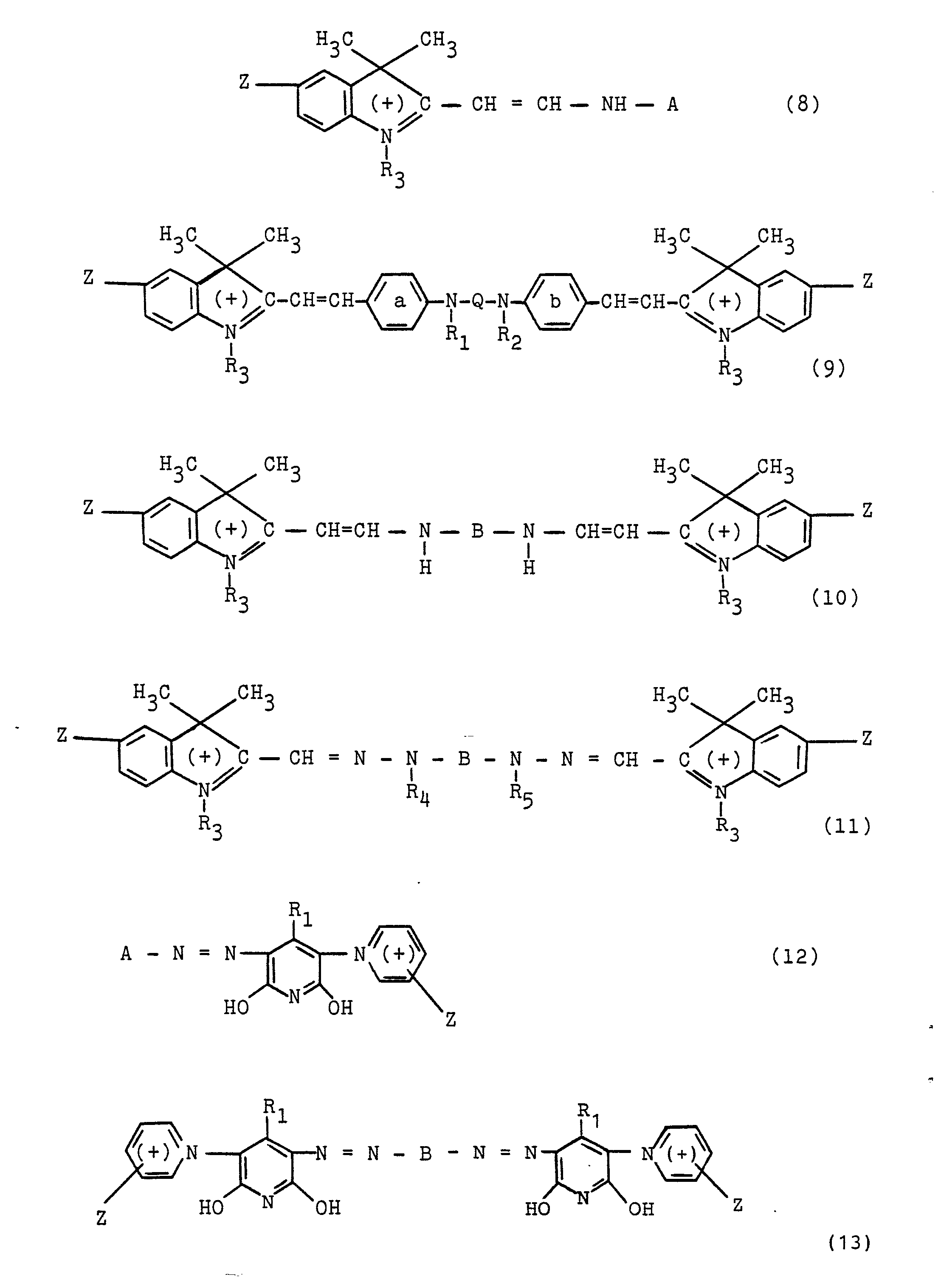

In diesen Formeln bedeuten:
Alk ist eine niedere Alkylgruppe, wobei eine oder zwei davon durch eine Hydroxy-, Cyano-, Carbamoyl- oder Phenylgruppe substituiert sein kann;
D⁽⁺⁾ ist ein Benzthiazoliumrest, dessen quarternäres Stickstoffatom eine niedere Alkylgruppe oder eine Benzylgruppe gebunden enthält und dessen aromatischer carbocyclischer Rest durch eine Methoxy-, Ethoxy- oder Methylgruppe oder β-Trialkylammonio-ethoxy-Gruppe mit Alkylresten von 1 bis 4 C-Atomen substituiert sein kann, oder ist ein Triazolium-, Pyrazolium-, Thiazolium- oder Benzimidazolium-Rest, der durch Phenyl-, Benzyl- und/oder niedere Alkylreste substituiert ist, oder ist ein Phenylrest, der, direkt oder über eine niedere Alkylen-, Alkylenoxy-, Alkylencarbonyl-, Alkylensulfonyl- oder Alkylensulfonamido-Gruppe gebunden, die oben definierte Ammoniumgruppe -N⁽⁺⁾(Alk)₃ enthält und noch durch Chlor, Brom, Methoxy, Methyl und/oder Nitro substituiert sein kann;
D ist eine heterocyclische oder carbocyclische Diazokomponente, wie insbesondere ein Phenylrest, der durch 1 oder 2 Substituenten aus der Gruppe niederes Alkyl, niederes Alkoxy, Halogen, wie Chlor und Brom, Trifluormethyl, Nitro, Cyano, niederes Alkylsulfonyl und Arylsulfonyl substituiert sein kann;
K ist als Rest einer Kupplungskomponente der Rest des Anilins oder des 1-Amino- oder 2-Amino-naphthalins, dessen N-Atom noch durch niedere, gegebenenfalls substituierte Alkylreste oder durch gegebenenfalls substituierte Arylreste mono- oder disubstituiert sein kann, wobei die gegebenenfalls substituierten Alkylreste bevorzugt hydroxy-, amino-, cyan- oder phenylsubstituierte Alkylreste und die Arylreste bevorzugt Phenylreste sind, wobei in Formel (3) und (5) die Ammoniumgruppe an einen Alkyl- oder Aralkylrest von K gebunden ist und wobei die aromatischen Kerne des Anilin- und Naphthylamin-Restes durch 1 oder 2 Substituenten aus der Gruppe niederes Alkyl, niederes Alkoxy, Halogen, wie insbesondere Chlor, niederes Alkanoylamino, Ureido und Phenylureido substituiert sein können;
der Benzolkern a oder b oder beide können in zueinander gleicher oder voneinander verschiedener Weise, durch 1 oder 2 Substituenten aus der Gruppe niederes Alkyl, niederes Alkoxy, Halogen, wie Fluor, Brom und insbesondere chlor, Trifluormethyl und niederes Alkanoylamino substituiert sein;
Q ist eine niedere Alkylengruppe, wie beispielsweise die Ethylen- oder Propylengruppe oder eine niedere Alkylenoxyalkylengruppe, wie beispielsweise eine Ethylenoxyethylengruppe, oder eine niedere Alkylenaminoalkylengruppe, wie beispielsweise die Diethylenaminogruppe, wobei die Aminogruppe gegebenenfalls noch durch eine niedere Alkylgruppe, die durch Hydroxy, Cyano oder Phenyl substituiert sein kann, substituiert ist, oder ist eine Alkylengruppe von 2 bis 8 C-Atomen, die durch 2 Aminogruppen, die durch niederes Alkyl oder hydroxy-, cyano- oder phenylsubstituiertes niederes Alkyl substituiert sein können, oder durch 2 Sauerstoffatome unterbrochen ist, oder ist eine Alkylengruppe von 2 bis 8 C-Atomen, die durch einen Phenylenrest unterbrochen ist;
R₁ und R₂ sind zueinander gleich oder voneinander verschieden und jedes bedeutet ein Wasserstoffatom oder eine niedere Alkylgruppe, die gegebenenfalls substituiert ist, wie insbesondere durch eine Hydroxy-, Cyano- oder Phenylgruppe;
A ist ein Benzolkern, ein Naphthalinkern oder der Azobenzol-Rest, die durch 1 oder 2 Substituenten aus der Gruppe niederes Alkyl, niederes Alkoxy, Chlor, Trifluormethyl, niederes Alkanoylamino, Benzoylamino, durch niederes Alkyl disubstituiertes Amino, N-(niederes Alkyl)-N-phenyl-amino und N-(niederes Alkyl)-N-benzyl-amino oder durch 1 niedere ω-Dialkoxyamino-alkoxy- oder 1 niedere ω-Trialkylammonio-alkoxy-Gruppe substituiert sein kön nen, wobei die Alkylreste dieser disubstituierten Aminogruppen noch durch Hydroxy, Carbonamido oder Cyano substituiert sein können;
R₃ ist ein niederer Alkylrest, der durch eine Hydroxy-, niedere Alkanoylamino-, niedere Alkoxy-, Cyano- oder Phenylgruppe substituiert sein kann;
R₄ und R₅ sind zueinander gleich oder voneinander verschieden und jedes bedeutet ein Wasserstoffatom oder eine niedere Alkylgruppe, die substituiert sein kann, wie bspw. durch eine Hydroxy-, Cyano- oder Phenylgruppe;
Z bedeutet ein Wasserstoffatom oder ein Halogenatom, wie ein Chloratom, eine niedere Alkylgruppe, eine niedere Alkoxygruppe oder eine niedere Carbalkoxygruppe;
B ist ein Phenylenrest oder ein Rest der allgemeinen Formel 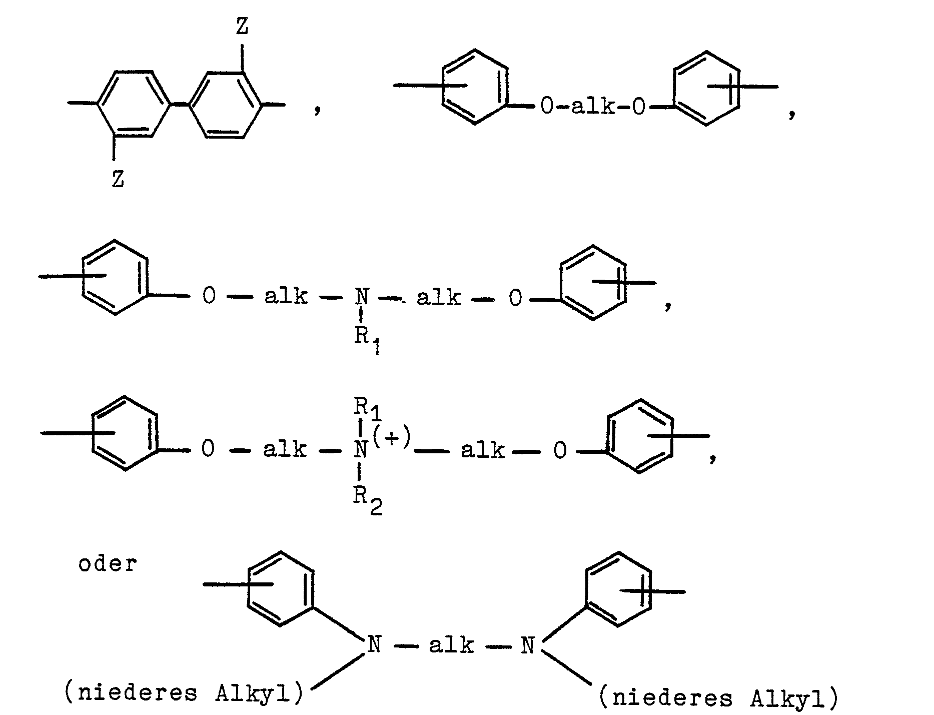 in welchen
alk eine niedere Alkylengruppe bedeutet und
R₁, R₂ und Z die obengenannten Bedeutungen, oder
B ist ein Rest der allgemeinen Formel 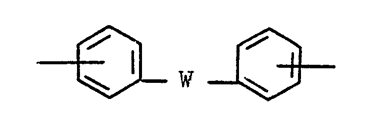 in welcher W eine niedere Alkylengruppe, ein Sauerstoffatom, die Carbonyl-, Sulfonyl-, Azo- oder Vinyliden-Gruppe oder eine Gruppe der Formel -CO-NH- oder -NH-CO-NH- bedeutet.

Die erfindungsgemäßen Farbsalze eignen sich beispielsweise zum Färben von PAC in Form von Fasermaterial oder in der Masse. Sie besitzen überraschenderweise in der Regel eine hohe Löslichkeit in den zum Spinnfärben von Polymeren und Mischpolymeren verwendeten bekannten Lösemitteln, wie beispielsweise Dimethylformamid, Dimethylacetamid, Dimethylsulfoxid, Diethylcarbonat und Aceton. Dies gilt in ganz besonderem Maße für die erfindungsgemäßen Farbstoff-Tetrarhodanozincat-Salze. Man kann deshalb mit diesen Solventien bereits bei Raumtemperatur hochprozentige Farbstoffstammlösungen herstellen, die in Abhängigkeit von der Farbstoffstruktur bis zu 50 Gew.-% Farbstoff enthalten, wobei durch Temperaturerhöhung die Löslichkeit gesteigert werden kann. Die neuen Farbsalze können den das Polymer gelösten Spinnlösungen in Form dieser Stammlösungen mit den oben genannten, zum Lösen des Polymers verwendeten Lösemitteln zugesetzt werden, aber auch diesen Spinnlösungen direkt zugesetzt und darin gelöst werden. Nach Homogenisierung wird die nun das Farbsalz enthaltende Spinnlösung erfindungsgemäß analog einer Verfahrensweise eines bekannten Naßspinnverfahrens oder Trockenspinnverfahrens versponnen; die so erhaltenen Fasern werden wie üblich nachbehandelt.

Die vorliegende Erfindung betrifft deshalb auch die Verwendung der erfindungsgemäßen Farbsalze in der Massespinnfärbung von PAC, insbesondere vorteilhaft in der Spinnfärbung gemäß den Naßspinnverfahrensweisen, bzw. ein Verfahren zum Spinnfärben von PAC, bevorzugt nach der Naßspinnmethode, bei welchem man als im Solvens für PAC lösliches Farbmittel ein erfindungsgemäßes Farbsalz einsetzt und man mit der das erfindungsgemäße Farbsalz enthaltenden Spinnlösung die Herstellung von spinngefärbten PAC-Fäden nach einer üblichen Spinnfärbeweise durchführt.

Mit den erfindungsgemäßen spinnmassenlöslichen kationischen Farbsalzen werden völlig transparente, stippenfreie Spinnlösungen erhalten, die keine mechanische Abnutzung der Spinndüsen oder Verstopfung verursachen. Die nach dem Verspinnen erhaltenen Fasern bzw. Fäden zeigen durch die überwiegend molekular-disperse Verteilung der erfindungsgemäßen Farbsalze keine Mattierungserscheinungen, wie sie bei Einsatz von Farbpigmenten auftreten. Durch das Fehlen von Farbstoffaggregaten an der Faseroberfläche, wie sie im Gegensatz hierzu beim Spinnfärben mit Farbpigmenten auftreten, besitzen die gefärbten, versponnenen Fäden eine ausgezeichnete Trocken- und Naßreibechtheit. Die erfindungsgemäßen Farbsalze können untereinander beliebig zu den verschiedensten Farb- und Nuanceneinstellungen kombiniert werden.

Die erfindungsgemäßen Farbsalze können gegebenenfalls zusammen mit organischen oder anorganischen Farbpigmenten, wie z.B. mit Monoazo-, Disazo-, Phthalocyanin-, Anthrachinon-, Dioxazin-, Naphthalintetracarbonsäure-, Perylentetracarbonsäure-, Chinacridon-Pigmenten sowie Fluoreszenzpigmenten, ebenso mit Ruß eingesetzt werden, weiterhin zusammen mit den üblicherweise zum Mattieren von Polymeren verwendeten Mitteln, wie z.B. mit Zinkoxid, Zinksulfid oder Titandioxid, wodurch sich die Möglichkeit ergibt, den Glanz der gesponnenen Fäden durch entsprechende Zudosierung an Mattierungsmitteln nach Bedarf gezielt zu steuern.

Die PAC-Polymere sind zahlreich bekannt und beschrieben. Neben den Polymeren des Acrylnitrils kommen als zu verspinnende Substrate Mischpolymerisate des Acrylnitrils mit anderen Vinylverbindungen, wie z.B. Vinylchlorid, Vinylidenchlorid, Vinylfluorid, Vinylidencyanid, Vinylacetat, Vinylpropionat, Vinylpyridin, Vinylimidazol, Vinylpyrrolidon, Vinyläthanol, Acryl- oder Methacrylsäure, Acryl- oder Methacrylsäureester, Acryl- oder Methacrylsäureamide in Betracht, wobei diese Mischpolymerisate mindestens 50 Gew.-%, vorzugsweise mindestens 85 Gew.-% Acrylnitril enthalten. Die Polymere des Acrylnitrils oder dessen Mischpolymerisate sind bevorzugt sauer modifiziert; sie enthalten saure Gruppen, die als Endgruppen, wie z.B. Sulfo- oder Sulfatogruppen, mittels eines Katalysators in das Polymere eingeführt oder als saure Gruppen enthaltende Comonomere, wie z.B. Styrol-4-sulfonsäure, Vinyl-, Allyl- oder Methallylsulfonsäure, einpolymerisiert wurden.

Die nachstehenden Beispiele dienen zur Erläuterung der Erfindung. Die angegebenen Teile und Prozentangaben sind Gewichtsteile und Gewichtsprozente, sofern nicht anders vermerkt.
Die in den Beispielen für die erfindungsgemäßen Farbsalze angegebenen Absorptionsmaxima (λₘₐₓ -Werte) im sichtbaren Bereich wurden in Dimethylformamid als Lösemittel bestimmt.

### Beispiel 1

In eine Lösung von etwa 60°C von 169,5 Teilen der Carbinolbase der Formel 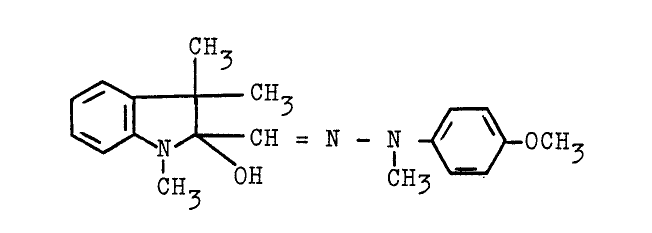 (bekannt aus EP-A 0 041 926) in 150 Teilen Eisessig und 250 Teilen Wasser trägt man 22,4 Teile Zinkoxid ein und verdünnt mit weiteren 900 Teilen Wasser. Man klärt die erhaltene Lösung durch Filtration und läßt sie in eine Lösung von 87,5 Teilen Ammoniumrhodanid in 1700 Teilen Wasser einlaufen, rührt 1 bis 2 Stunden nach und saugt den grob ausgefallenen Niederschlag ab, wäscht ihn mit Wasser zur Entfernung von anorganischen Salzen nach und trocknet ihn bei 50 bis 60°C.

Es wird das Farbstoffsalz der Formel 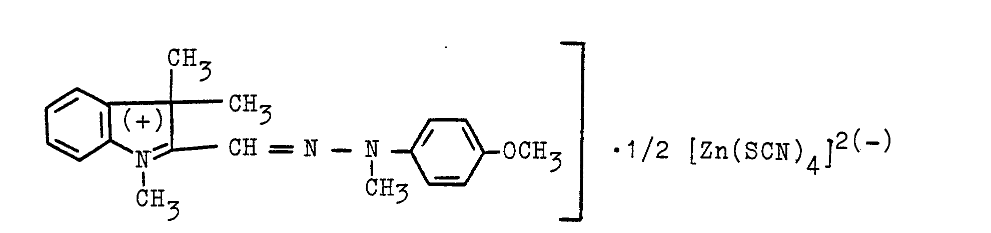 in einer Ausbeute von 224 Teilen erhalten. Es zeigt eine überraschend hohe Löslichkeit in organischen Solventien, wie in Dimethylformamid (Löslichkeit: 21 %), Dimethylacetamid (20 %) und Aceton (10 %), und eignet sich hervorragend zum Spinnfärben von PAC. Die hiernach erhältlichen goldgelben Fäden besitzen ein sehr hohes Echtheitsniveau.
(λₘₐₓ = 449 nm).
Analyse (berechnet auf ein Molgewicht von 470,69 gemäß der Summenformel C₂₂H₂₄N₅OS₂Zn_{0,5} ):
ber.: C 56,1 %, H 5,1 %, N 14,9 %, S 13,6 %, Zn 6,95 %;
gef.: C 56,2 %, H 5,05 %, N 14,8 %, S 13,3 %, Zn 7,0 %.

### Beispiel 2

Eine 50 bis 60°C warme Lösung von 107 Teilen des Farbstoffes der Formel 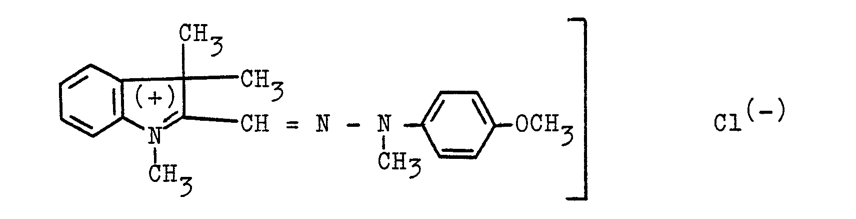 (beschrieben als C.I. Basic Yellow 28) in 1500 Teilen Wasser und 5 Teilen Eisessig läßt man in eine Mischung aus 200 Teilen Bis und eine Lösung, hergestellt aus 800 Teilen Wasser, 158 Teilen einer 20%igen wäßrigen Zinkacetatlösung und 65 Teilen Kaliumcyanat, einlaufen. Man erwärmt den Ansatz auf 50°C und rührt ihn bei dieser Temperatur noch etwa 90 Minuten nach. Die kristallin ausgefallene Verbindung wird bei 50°C abgesaugt, portionsweise mit Wasser gewaschen und bei 50°C unter reduziertem Druck getrocknet.

Die erfingungsgemäße Verbindung der Formel 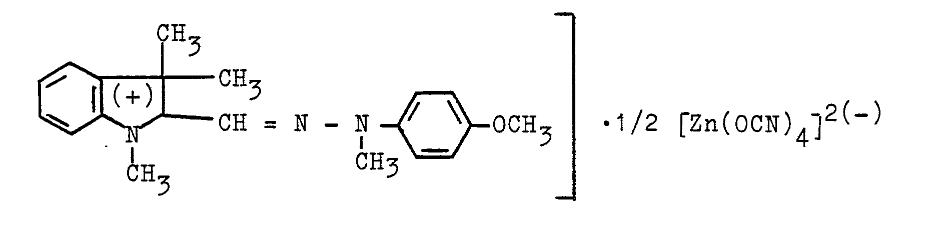 ist zu etwa 25% in Dimethylformamid, zu etwa 21 % in Dimethylacetamid und zu etwa 6 % in Aceton löslich. Sie eignet sich wegen ihrer sehr guten coloristischen Eigenschaften hervorragend zum Spinnfärben von sauer modifiziertem Polyacrylnitril. (λₘₐₓ = 449 nm).

Analyse (MG = 438,7; C₂₂H₂₄N₅OS₂Zn_{0,5}):
ber.: C 60,2 %, H 5,0 %, N 15,96 %, Zn 7,45 %;
gef.: C 59,7 %, H 5,0 %, N 16,2 %, Zn 7,4 %.

### Beispiel 3

28,7 Teile der Azoverbindung aus 3-Amino-1,2,4-triazol als Diazokomponente und N-Ethyl-N-(β-dimethylamino-ethyl)-anilin werden mit 8,4 Teilen Zinkoxid und 2,4 Teilen Magnesiumoxid in 50 Teilen Wasser suspendiert und mittels 66,5 Teilen Dimethylsulfat bei 35 bis 45°C methyliert und quaterniert. Der Ansatz wird noch 2 Stunden weitergerührt, und überschüssiges Dimethylsulfat wird nach Verdünnen des Ansatzes mit 125 Teilen Wasser bei 70°C während 2 bis 3 Stunden hydrolysiert. Die Lösung der quartären Azoverbindung wird sodann geklärt, mittels Eis auf 35 bis 40°C abgekühlt und mit wäßriger Ammoniaklösung auf einen pH-Wert von 3 bis 4,5 eingestellt. 31,5 Teile Ammoniumrhodanid werden innerhalb von 2 Stunden bei 35 bis 40°C hinzugegeben. Die entstandene Suspension des erfindungsgemäßen Farbstoffsalzes wird noch 2 bis 3 Stunden bei etwa 50°C nachgerührt, die erfindungsgemäße Verbindung sodann bei 35°C abgesaugt und portionsweise mit Wasser nachgewaschen und getrocknet.

Es wird die erfindungsgemäße Verbindung der Formel 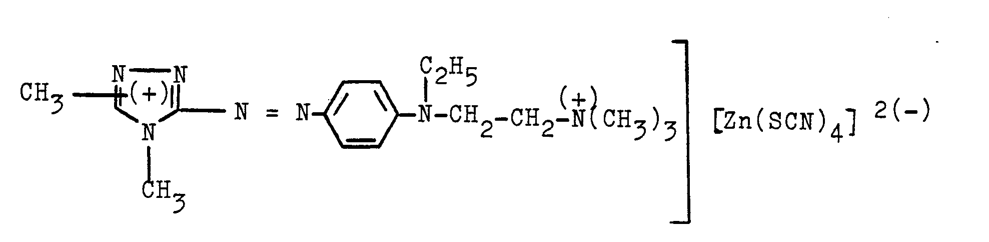 als dunkelbraunes Pulver erhalten. Sie löst sich zu etwa 24 % in Dimethylformamid, zu etwa 22 % in Dimethylacetamid und zu etwa 16% in Aceton. (λₘₐₓ = 513 nm).

Analyse (MG = 628,38; C₂₁H₂₉N₁₁S₄Zn):
ber.: C 40,1 %, H 4,62 %, N 24,5 %, S 20,4 %, Zn 10,4 %;
gef.: C 39,75%, H 4,6 %, N 23,8 %, S 20,6 %, Zn 10,3 %.

In der Spinnfärbung von PAC werden glänzende, leuchtend rot gefärbte Fäden mit hervorrangenden Echtheiten erhalten.

### Vergleichsbeispiel:

Man stellt die Lösung des Quartär-Azofarbstoffes mit dem Methosulfatanion wie oben beschrieben her, jedoch mit der Abänderung, daß kein Zinkoxid als basisches Mittel, sondern die äquivalente Menge an Magnesiumoxid oder Natriumbicarbonat verwendet wird, und versucht den erhaltenen Quartärfarbstoff aus der Lösung als Rhodanid-Salz durch Zugabe der entsprechenden Menge von Ammoniumrhodanid abzuscheiden. Es wird hierbei nur ein Teil des Farbstoffes in Form eines öligen Produktes erhalten, das auch später nicht durchkristallisiert.

### Beispiel 4

Man verfährt zur Synthese eines erfindungsgemäßen Farbsalzes wie im Beispiel 3 beschrieben, setzt jedoch anstelle von Ammoniumrhodanid 33,7 Teile Kaliumcyanat ein. Das zunächst schmierig anfallende Farbstoffsalz kristallisiert langsam durch. Die erhaltene kristalline Verbindung der Formel 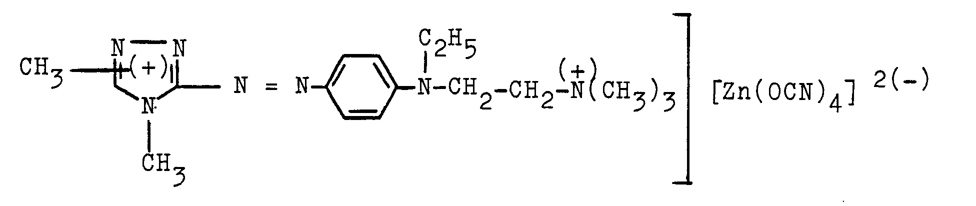 wird gemäß den Angaben der vorherigen Beispiele isoliert; sie löst sich zu etwa 22 % in Dimethylformamid und zu etwa 20 % in Dimethylacetamid. (λₘₐₓ = 513 nm).

Analyse (MG = 564,38; C₂₁H₂₉N₁₁O₄Zn):
ber.: C 44,65 %, H 5,1 %, N 27,28 %, Zn 11,58 %;
gef.: C 44,3 %, H 5,2 %, N 27,1 %, Zn 11,3 %.

### Beispiel 5

18,45 Teile 2-Chlor-4-amino-acetanilid werden in Gegenwart von 7,6 Teilen Magnesiumoxid in wäßriger Suspension bei 50 bis 60°C mit 50,6 Teilen Dimethylsulfat methyliert und quarterniert; anschließend wird die Acetylgruppe durch zweistündiges Erhitzen unter Rückfluß mit 32%iger Salzsäure hydrolytisch abgespalten, wobei auch überschüssiges Dimethylsulfat zerstört wird. Die quarternierte Diazokomponente wird sodann in üblicher Weise diazotiert und mit 13,4 Teilen N,Nʹ-Diethyl-N,Nʹ-diphenyl-1,2-diamino-ethan gekuppelt. Zu dieser Lösung der quartären Disazoverbindung gibt man 46 Teile einer 20%igen wäßrigen Zinkacetatlösung hinzu, anschließend bei 20 bis 25°C und bei einem pH-Wert von 3 allmählich eine wäßrige Lösung von 38 Teilen Ammoniumrhodanid. Man rührt zunächst bei etwa 20°C, sodann bei 35 bis 40°C jeweils noch eine Stunde nach und isoliert das grob ausgefallene erfindungsgemäße Farbsalz der Formel

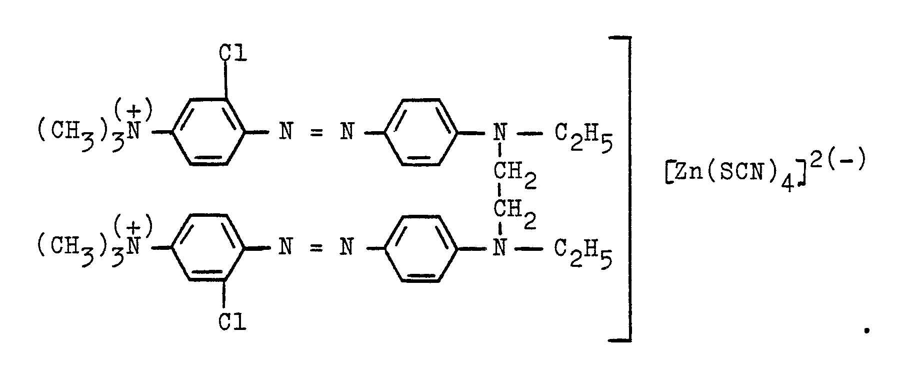

Die erfindungsgemäße Verbindung zeigt sehr gute Eigenschaften für die Spinnfärbung von PAC und liefert hierbei hochechte orange Färbungen. In Dimethylformamid ist sie zu 26%, in Dimethylacetamid zu etwa 22 % und in aceton zu etwa 10 % löslich. (λₘₐₓ = 475 nm).

### Beispiel 6

Man stellt gemäß Beispiel 5 die Diazoniumsalzlösung von 2-Chlor-4-trimethylammonium-anilin her und versetzt sie mit einer wäßrigen Lösung von 24,5 Teilen N-Ethyl-N-(β-trimethylammonio-ethyl)-anilin-chlorid. Nach beendeter Kupplungsreaktion läßt man den Ansatz langsam in eine Lösung aus 92 Teilen einer 20%igen wäßrigen Zinkacetatlösung und 38 Teilen Ammoniumrhodanid in 200 Teilen Wasser einlaufen. Das abgeschiedene erfindungsgemäße Farbsalz der Formel 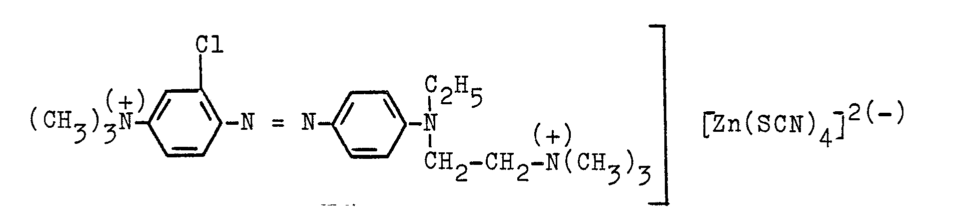 wird in üblicher Weise gemäß den vorigen Beispielen isoliert. Es ist in organischen Solventien, beispielsweise Dimethylformamid und Dimethylacetamid, sehr gut löslich und liefert in der Spinnfärbung von PAC Fäden mit hochechten goldgelben Farbtönen. (λₘₐₓ = 443 nm).

### Beispiel 7

90 Teile der Disazoverbindung der Formel 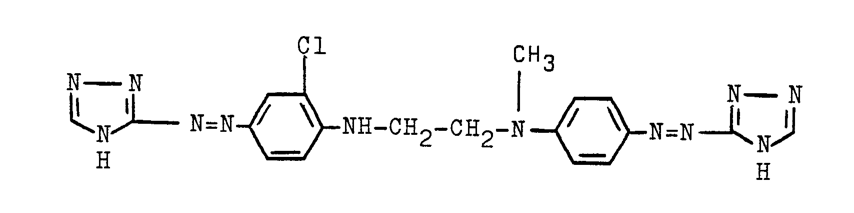 (herstellbar durch Kupplung von diazotiertem 3-Amino-1,2,4-triazol auf N-(2-Chlorphenyl)-Nʹ-ethyl-Nʹ-phenyl-1,2-diamino-ethan) werden in Gegenwart von Zinkoxid mid 132,4 Teilen Dimethylsulfat methyliert und quarterniert. Nach Hydrolyse von überschüssigem Dimethylsulfat wird die Lösung geklärt und bei einem pH-Wert zwischen 5 und 6 und einer Temperatur von etwa 35°C langsam mit einer wäßrigen Lösung von 62 Teilen Ammoniumrhodanid versetzt. Hierbei scheidet sich die erfindungsgemäße Verbindung kristallin aus. Sie wird in üblicher Weise isoliert. Sie besitzt die Formel 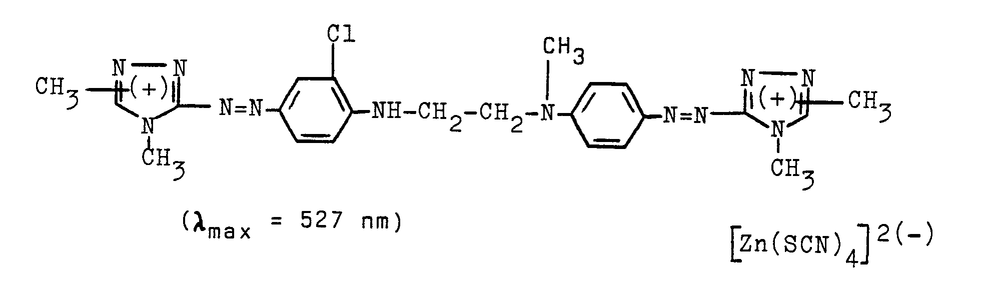 und löst sich in Dimethylformamid zu etwa 23 %, in Dimethylacetamid zu etwa 20 % und in Aceton zu etwa 15 %. In der Spinnfärbung von PAC werden mit ihr Fäden mit hohem Glanz in roter Nuance mit sehr gutem Echtheitsniveau erhalten.

### Beispiel 8

55 Teile der durch Kupplung von diazotiertem 3-Amino-1,2,4-triazol auf N,Nʹ-Diethyl-N,Nʹ-diphenyl-1,2-diamino-ethan erhältliche Disazoverbindung wird in üblicher Weise in Gegenwart von 55 Teilen Natriumhydrogencarbonat in 200 Teilen Wasser mit 116,5 Teilen Dimethylsulfat methyliert und quaterniert; überschüssiges Dimethylsulfat wird anschließend bei 70 bis 75°C hydrolisiert. Zur Herstellung der erfindungsgemäßen Verbindung versetzt man die Lösung dieses quartären Disazofarbstoffes zunächst mit Zinksulfat und sodann mit einer wäßrigen Natriumrhodanidlösung bei 35 bis 40°C, rührt bei 55 bis 60°C noch einige Zeit nach und saugt die ausgefallene erfindungsgemäße Verbindung bei dieser Temperatur ab, wäscht sie gut mit Wasser mehrmals nach und trocknet sie. Sie besitzt die Formel 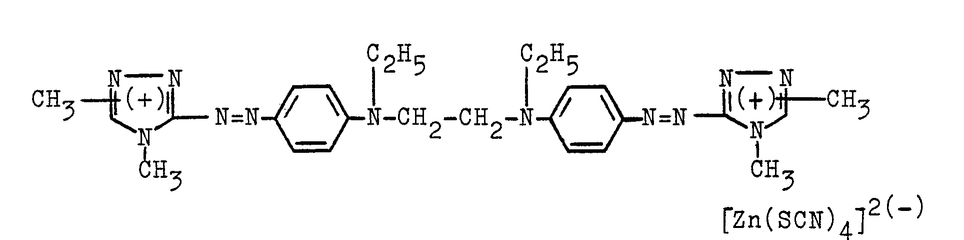 und zeichnet sich durch eine sehr gute Löslichkeit in Dimethylformamid und Dimethylacetamid aus; in PAC liefert sie in der Spinnfärbung Fäden von blaustichig roter Nuance mit sehr guten Echtheiten. (λₘₐₓ = 551 nm).

### Beispiel 9

68 Teile der im Beispiel 1 formelmäßig angegebenen Carbinolbase werden in verdünnter wäßriger Essigsäure gelöst und mit 28,7 Teilen Kupfer(II)-sulfat-pentahydrat versetzt. Die Lösung läßt man in eine Lösung von 53 Teilen Kaliumcyanat in 1000 Teilen Wasser unter Rühren einlaufen. Die sich bildende Suspension wird allmählich auf 50°C erwärmt und bei dieser Temperatur noch 1 Stunde nachgerührt. Das in groben Kristallen ausgefallene erfindungsgemäße Farbsalz der Formel 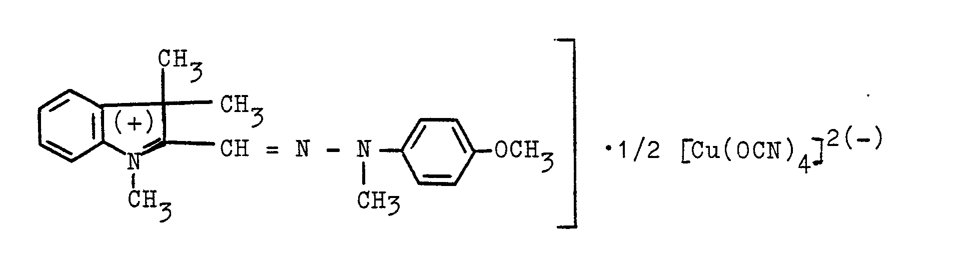 wird abgesaugt, mit Wasser frei von anorganischen Begleitsalzen gewaschen und getrocknet. Die erfindungsgemäße Verbindung löst sich in Dimethylformamid zu etwa 15 % und in Dimethylacetamid zu etwa 13 % und liefert in der Spinnfärbung von PAC Fäden in rotstichig gelben Tönen mit hohem Echtheitsniveau. (λₘₐₓ = 449 nm).

Analyse (MG = 437,8; C₂₂H₂₄N₅O₃Cu_{0,5}):
ber.: C 60,3 %, H 5,48 %, N 16,0 %, Cu 7,3 %;
gef.: C 59,9 %, H 5,4 %, N 16,05 %, Cu 7,5 %.

### Beispiel 10

Zur Herstellung eines erfindungsgemäßen Farbstoffsalzes verfährt man gemäß der Verfahrensweise des Beispieles 9, setzt jedoch anstelle von Kupfer(II)-sulfat 18,8 Teile Eisen(II)-sulfat-Dihydrat und anstelle von Kaliumcyanat 38 Teile Ammoniumrhodanid ein. Die isolierte erfindungsgemäße Verbindung besitzt die Formel

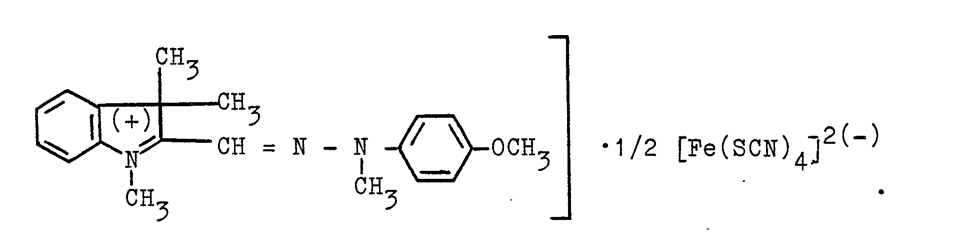

Sie löst sich zu etwa 15 % in Dimethylformamid, zu etwa 13 % in Dimethylacetamid und zu etwa 4 % in Aceton und färbt in der Spinnfärbung PAC in rotstichig gelben Nuancen. (λₘₐₓ = 449 nm).
Analyse (MG = 465,9; C₂₂H₂₄N₅OS₂Fe_{0,5}):
ber.: C 56,7 %, H 5,15 %, N 15,0 %, S 13,7 %, Fe 5,99 %;
gef.: C 56,9 %, H 5,2 %, N 15,05 %, S 13,3 %, Fe 5,88 %.

### Beispiel 11

28,7 Teile einer Azoverbindung aus 3-Amino-1,2,4-triazol als Diazokomponente und N-Ethyl-N-(β-dimethylamino-ethyl)-anilin als Kupplungskomponente werden in Gegenwart von Magnesiumoxid mit Dimethylsulfat bei 35 bis 45°C methyliert und quarterniert. Nach Zugabe des Dimethylsulfats wird der Ansatz noch 2 Stunden bei 35 bis 45°C weitergerührt, überschüssiges Dimethylsulfat sodann bei 70°C hydrolysiert. Es wird danach ein pH-Wert von 3 eingestellt und der Ansatz mit einer wäßrigen Lösung von 30,3 Teilen Nickel(II)-sulfat-Hexahydrat versetzt. Bei einer Temperatur von etwa 20°C läßt man eine wäßrige Lösung von 53,5 Teilen Ammoniumrhodanid hinzulaufen, rührt zunächst bei etwa 20°C etwa 1 Stunde sodann bei 40 bis 50°C zwei Stunden nach, saugt die ausgefallene erfindungsgemäße Verbindung ab, wäscht sie mit Wasser nach und trocknet sie.

Die erfindungsgemäße Verbindung der Formel 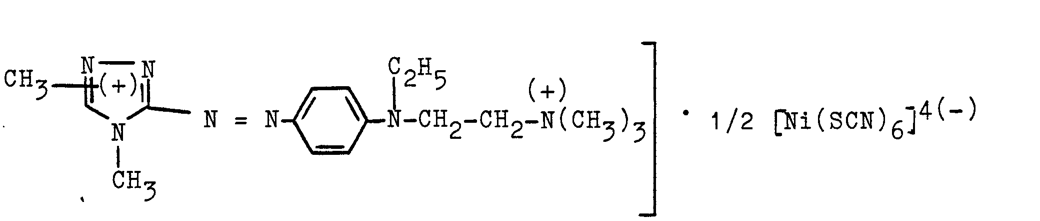 eignet sich aufgrund der überraschend guten Löslichkeit in organischen Solventien für die Massespinnfärbung, wie bspw. für die üblichen Naßspinnfärbeverfahren, zur Herstellung von gefärbten PAC-Fäden in klaren roten Nuancen mit hohem Echtheitsniveau. (λₘₐₓ = 513 nm).

Analyse (MG = 534,35; C₂₀H₂₉N₁₀S₃Ni_{0,5}):
ber.: C 44,9 %, H 5,43 %, N 26,2 %, S 17,97 %, Ni 5,49 %;
gef.: C 44,5 %, H 5,5 %, N 25,8 %, S 17,8 %, Ni 5,4 %.

### Beispiel 12

123 Teile der Azoverbindung aus 2-Amino-6-methoxy-benzthiazol als Diazokomponente und N-Ethyl-N-(β-hydroxyethyl)-anilin als Kupplungskomponente werden in Wasser in Gegenwart von 20 Teilen Natriumhydrogencarbonat bei 30 bis 45°C mit 84 Teilen Dimethylsulfat innerhalb von etwa 3 Stunden in üblicher Weise quaterniert. Nach der Hydrolyse des überschüssigen Dimethylsulfats wird der Ansatz mit der gelösten Quartärverbindung langsam in eine Lösung aus 158,2 Teilen einer 20%igen wäßrigen Zinkacetatlösung und 78,7 Teilen Ammoniumrhodanid in 1000 Teilen Wasser, der noch 800 Teile Eis zugegeben waren, eingerührt. Man rührt die entstandene Farbstoffsuspension noch etwa 1 Stunde bei etwa 10°C und anschließend bei 45 bis 50°C noch zwei Stunden nach, saugt die ausgefallene erfindungsgemäße Verbindung ab, wäscht sie mit Wasser salzfrei und trocknet sie. Sie besitzt die Formel 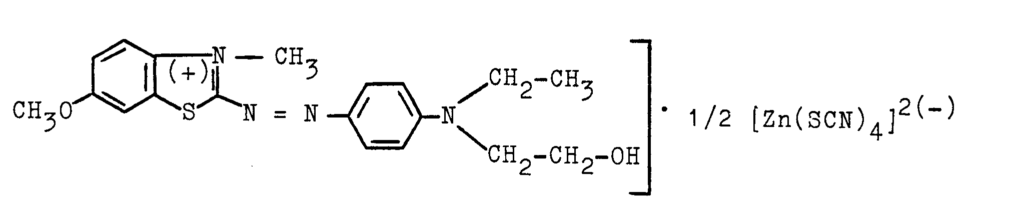 und ist in Dimethylformamid zu etwa 13 %, in Dimethylacetamid zu etwa 11 % und in Aceton zu etwa 6 % löslich. In der Spinnfärbung von PAC liefert sie Fäden von klarer blauer Nuance mit guten Echtheiten.

Analyse (MG = 519,69; C₂₁H₂₃N₆O₂S₃Zn_{0,5}):
ber.: C 48,5 %, H 4,43 %, N 16,16 %, S 18,47 %, Zn 6,3 %;
gef.: C 48,3 %, H 4,5 %, N 16,0 %, S 18,1 %, Zn 16,1 %.

### Beispiel 12a

Zur Herstellung einer erfindungsgemäßen Verbindung verfährt man gemäß der Herstellungsweise des Beispieles 12, setzt jedoch anstelle von Zinkacetat die äquivalente Menge an Kupfer(II)-sulfat ein. Man erhält das erfindungsgemäße Kupfer-tetrarhodano-Salz des in Beispiel 12 formelmäßig angegebenen Farbstoffkations. Es liefert in der Spinnfärbung von PAC Fäden mit klaren blauen Tönen in guten Echtheiten.

### Beispiel 12b

Zur Herstellung einer erfindungsgemäßen Verbindung verfährt man gemäß der Herstellungsweise des Beispieles 12, setzt jedoch anstelle von Zinkacetat die äquivalente Menge an Eisen(II)-sulfat ein. Man erhält das erfindungsgemäße Eisen-tetrarhodano-Salz des in Beispiel 12 formelmäßig angegebenen Farbstoffkations. Es liefert in der Spinnfärbung von PAC Fäden mit klaren blauen Tönen in guten Echtheiten.

### Beispiele 13 bis 89

In den nachfolgenden Tabellenbeispielen sind weitere erfindungsgemäße Farbsalze beschrieben, die insbesondere PAC in der Massespinnfärbung in den in dem jeweiligen Tabellenbeispiel angegebenen Nuancen zu färben vermögen. Ihr Ausblutverhalten in die Koagulations-, Streck- und Waschbäder ist sehr gering. Diese erfindungsgemäßen Farbsalze lassen sich in erfindungsgemäßer Weise aus den entsprechenden Quartärverbindungen mit anderen Anionen durch Umsetzung mit einer entsprechenden metallabgebenden Verbindung und mit einem Cyanat- oder Rhodanidsalz herstellen und als in Wasser unlösliche oder sehr schwer lösliche Rhodanometallat- bzw. Cyanatometallat-Salze praktisch frei von anderen Begleitsalzen isolieren.

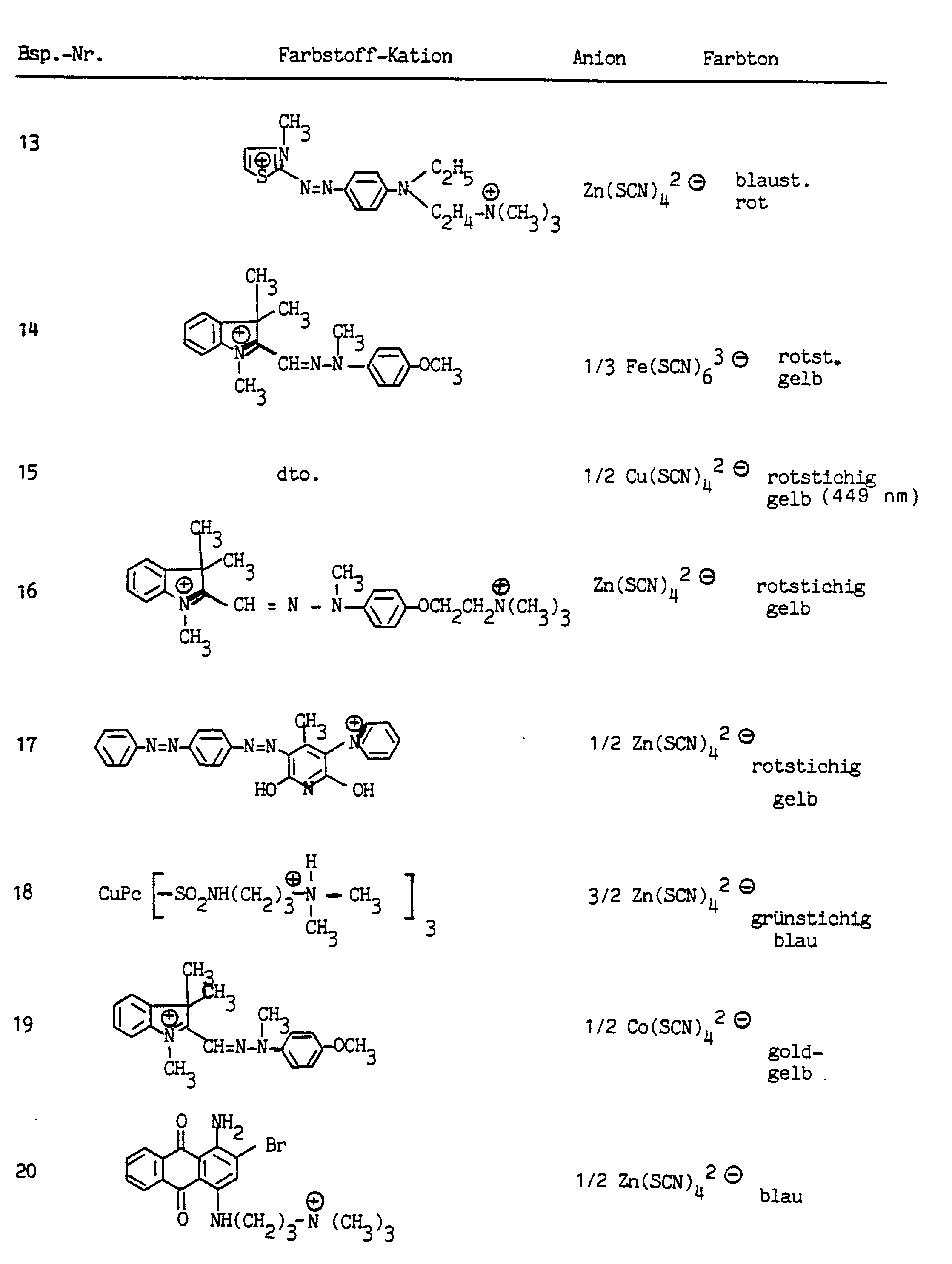

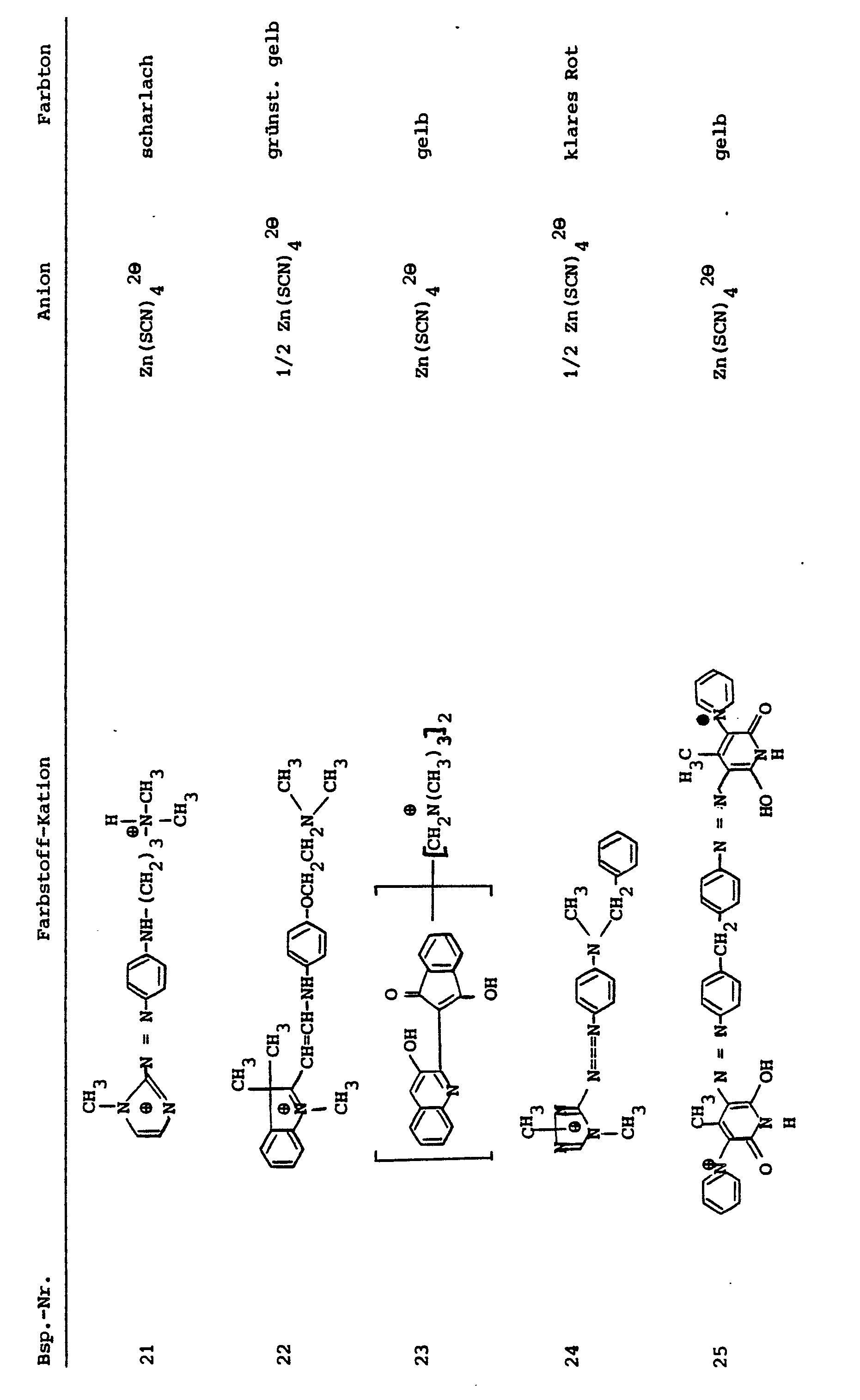

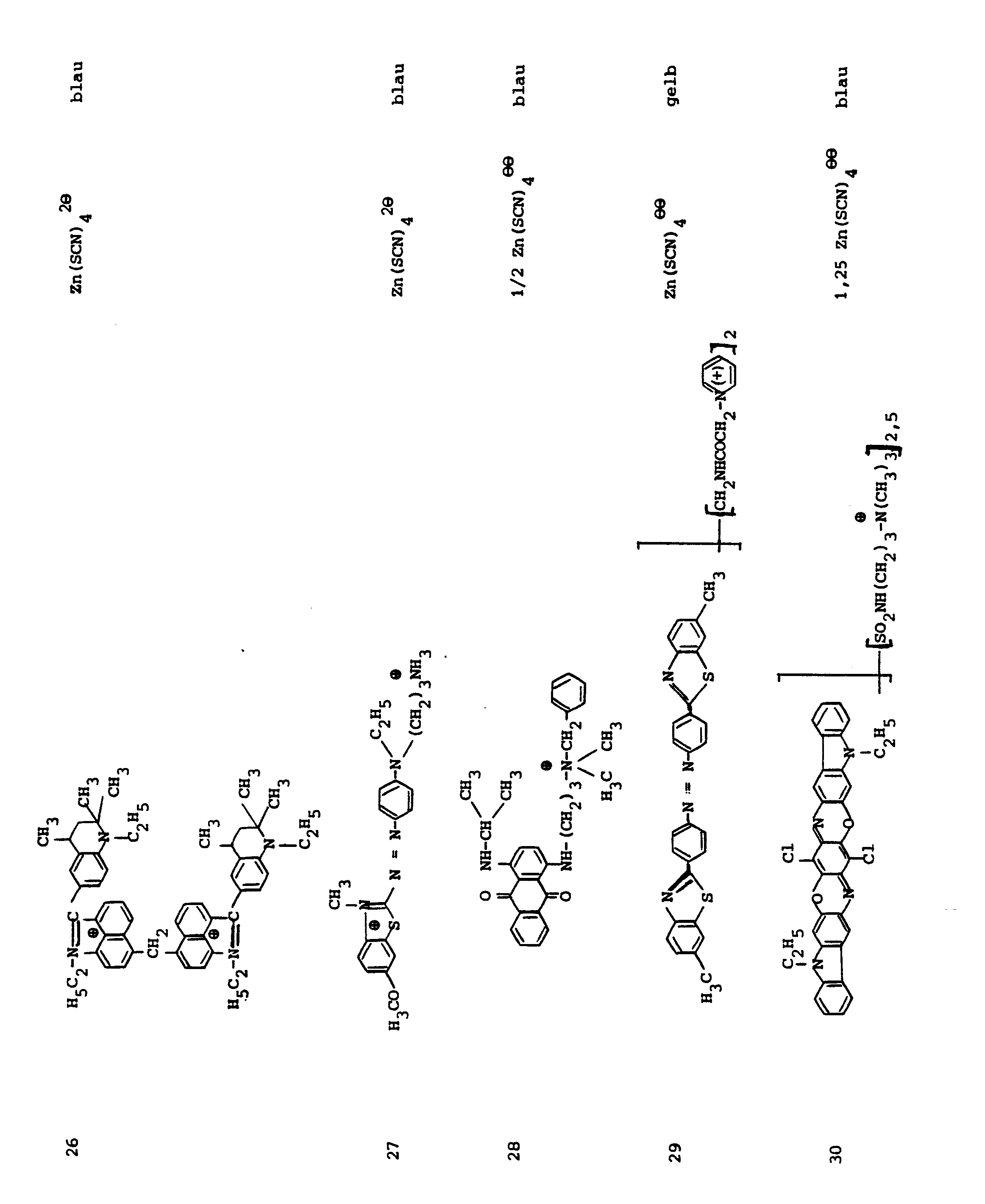

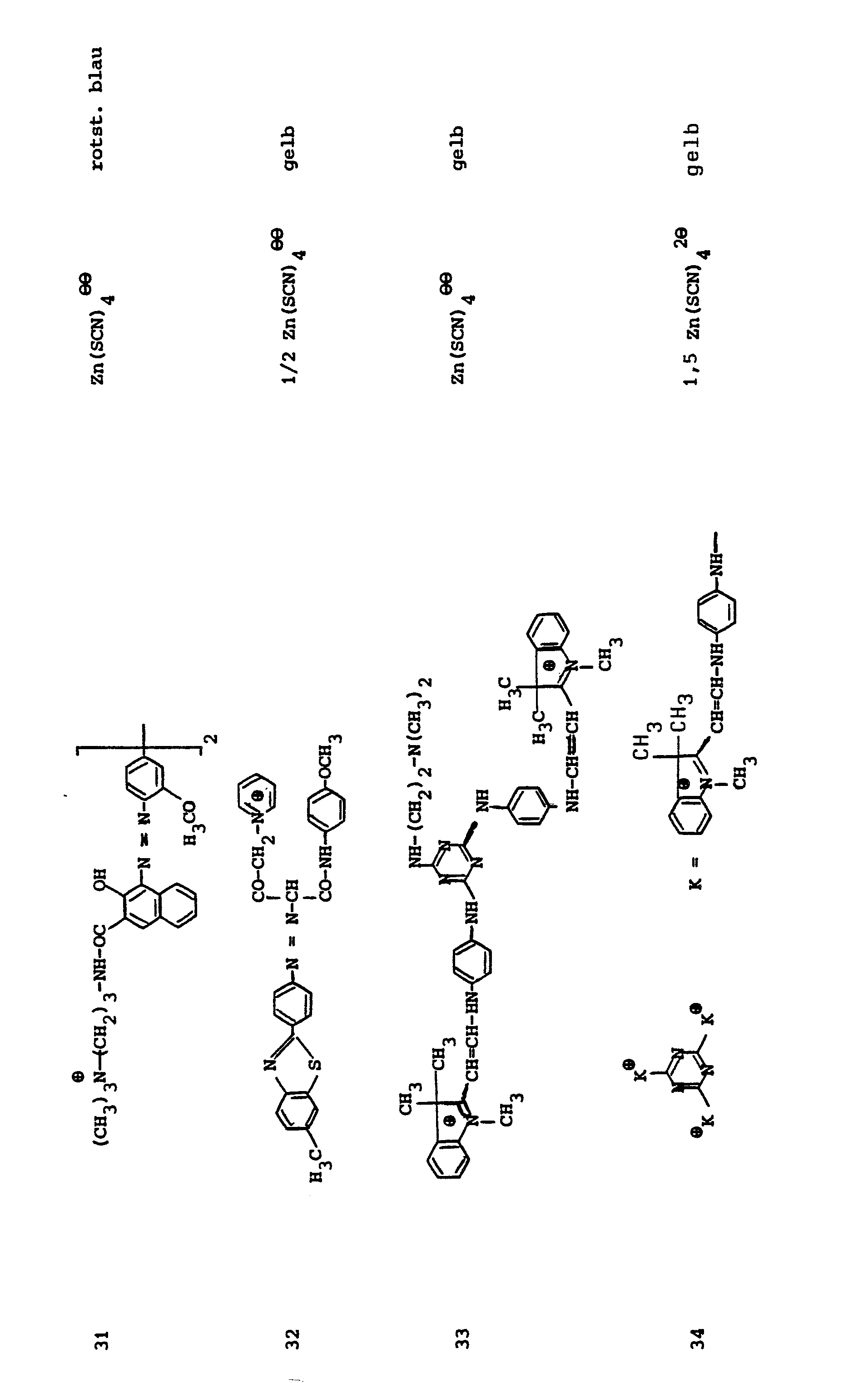

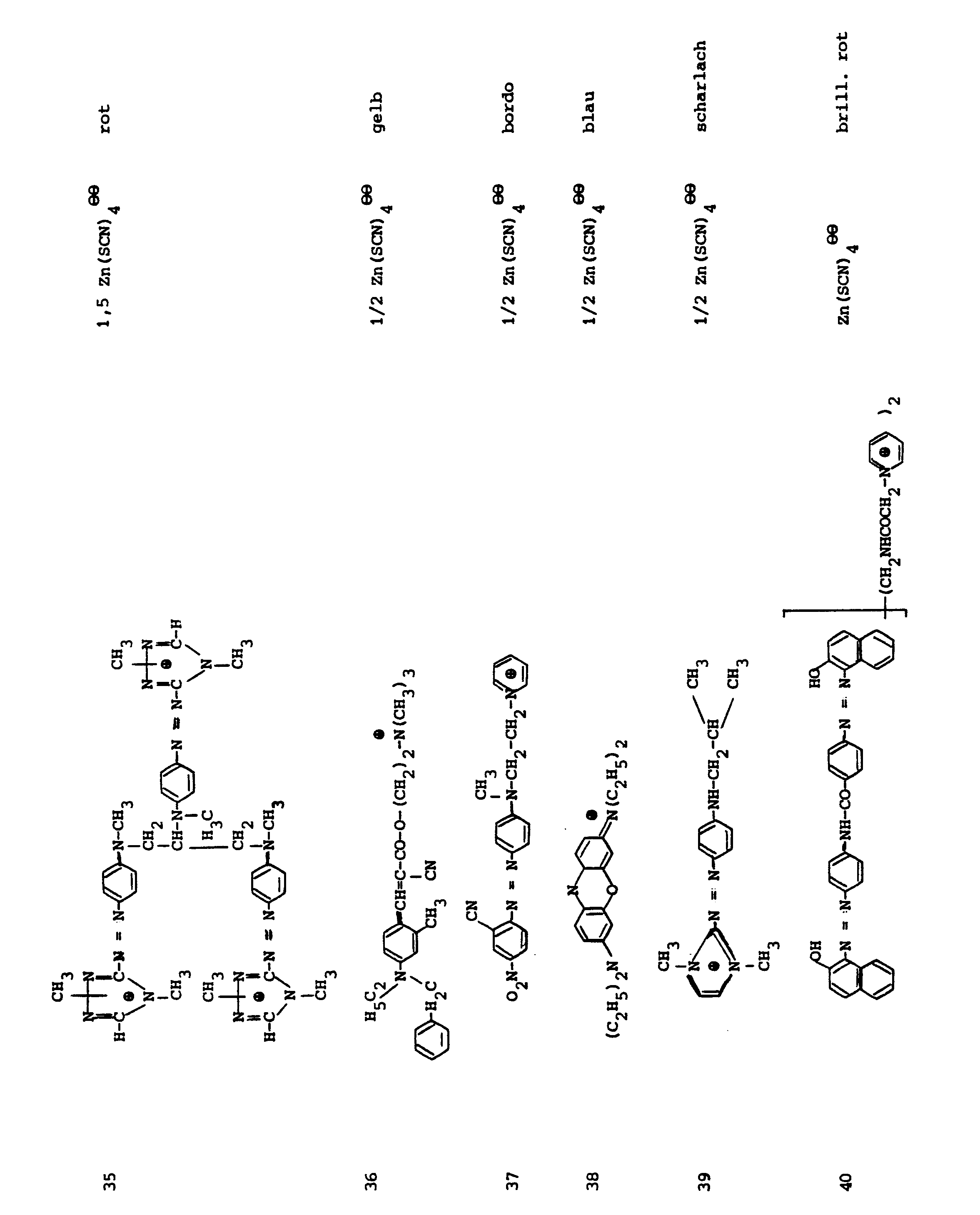

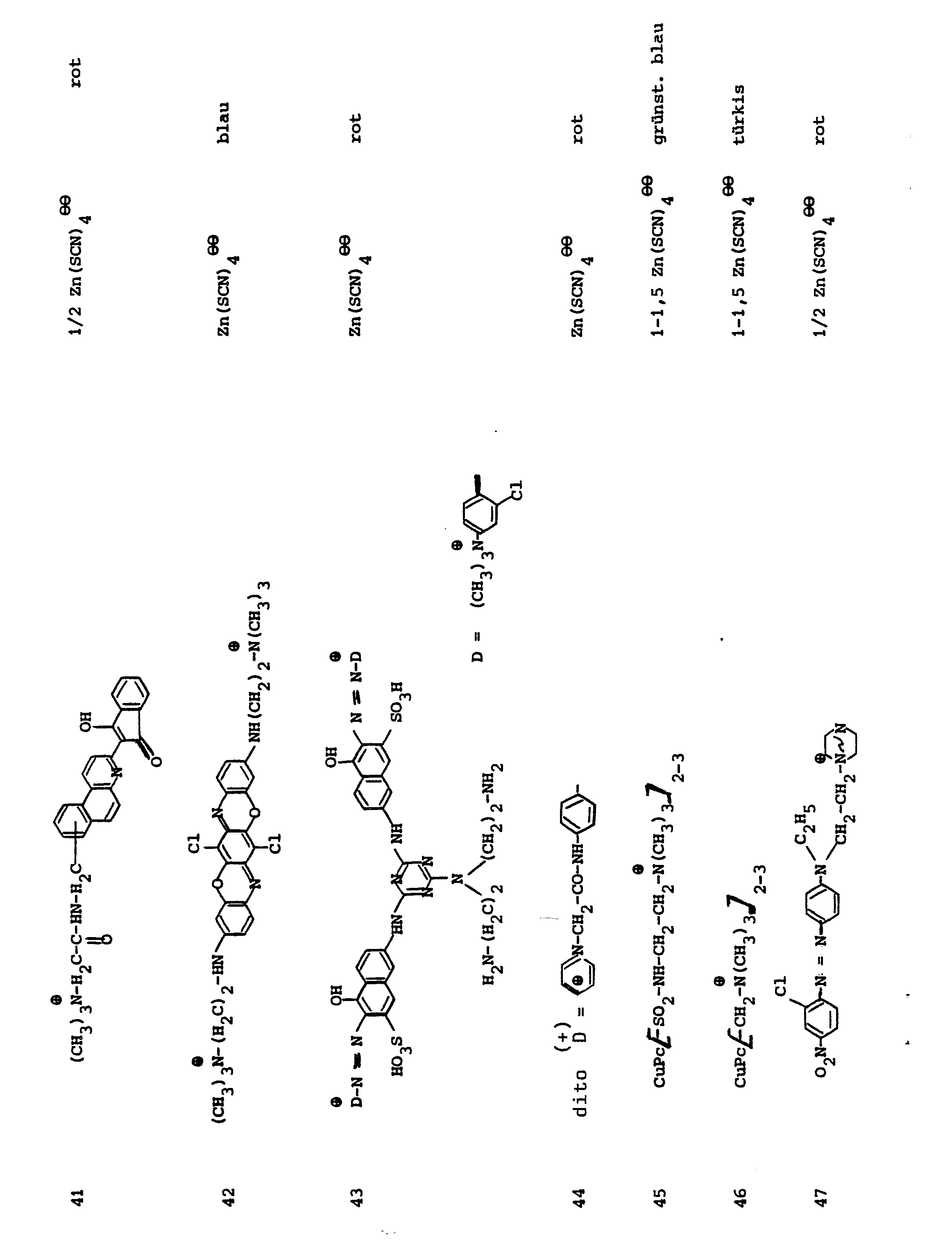

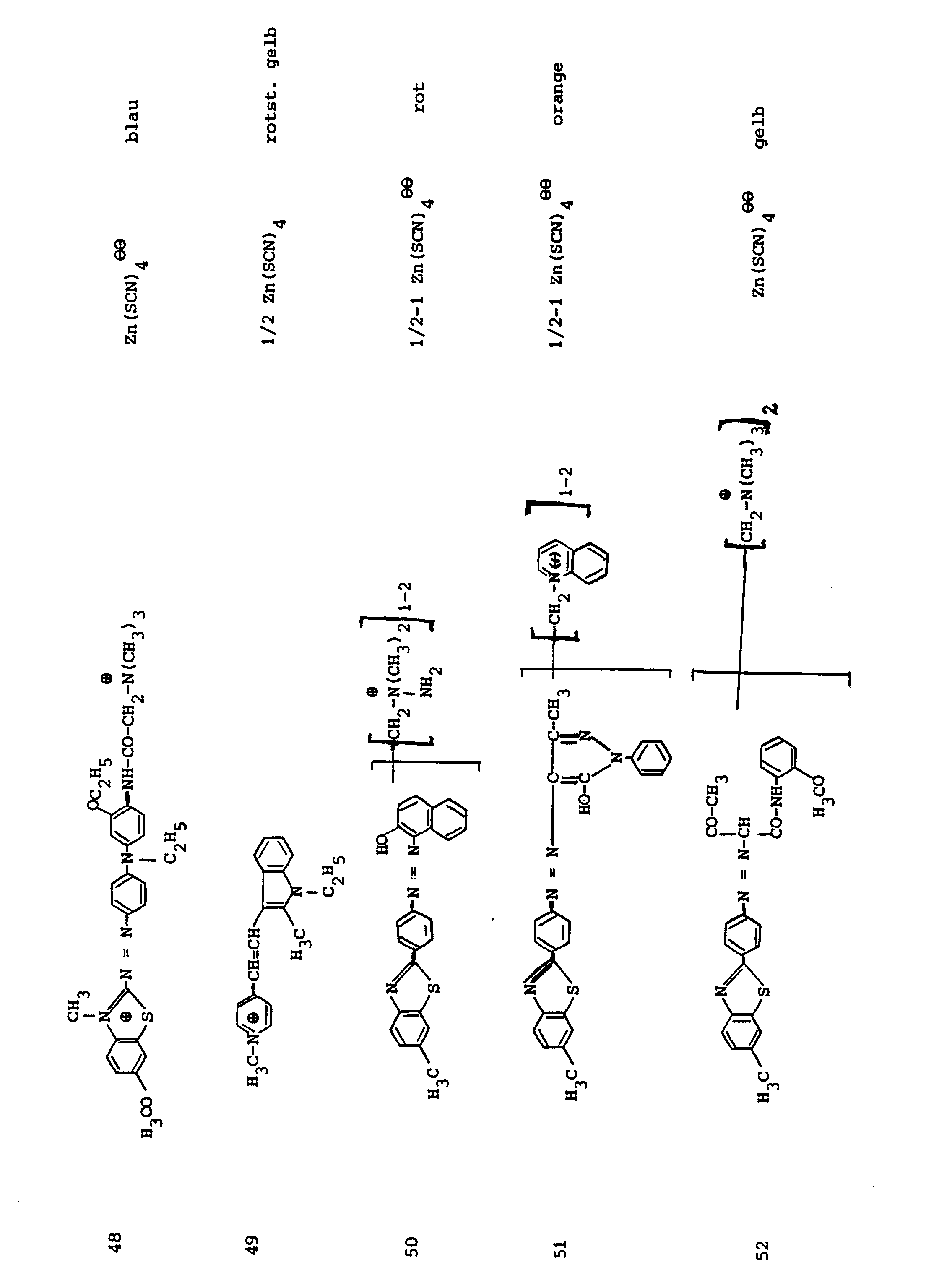

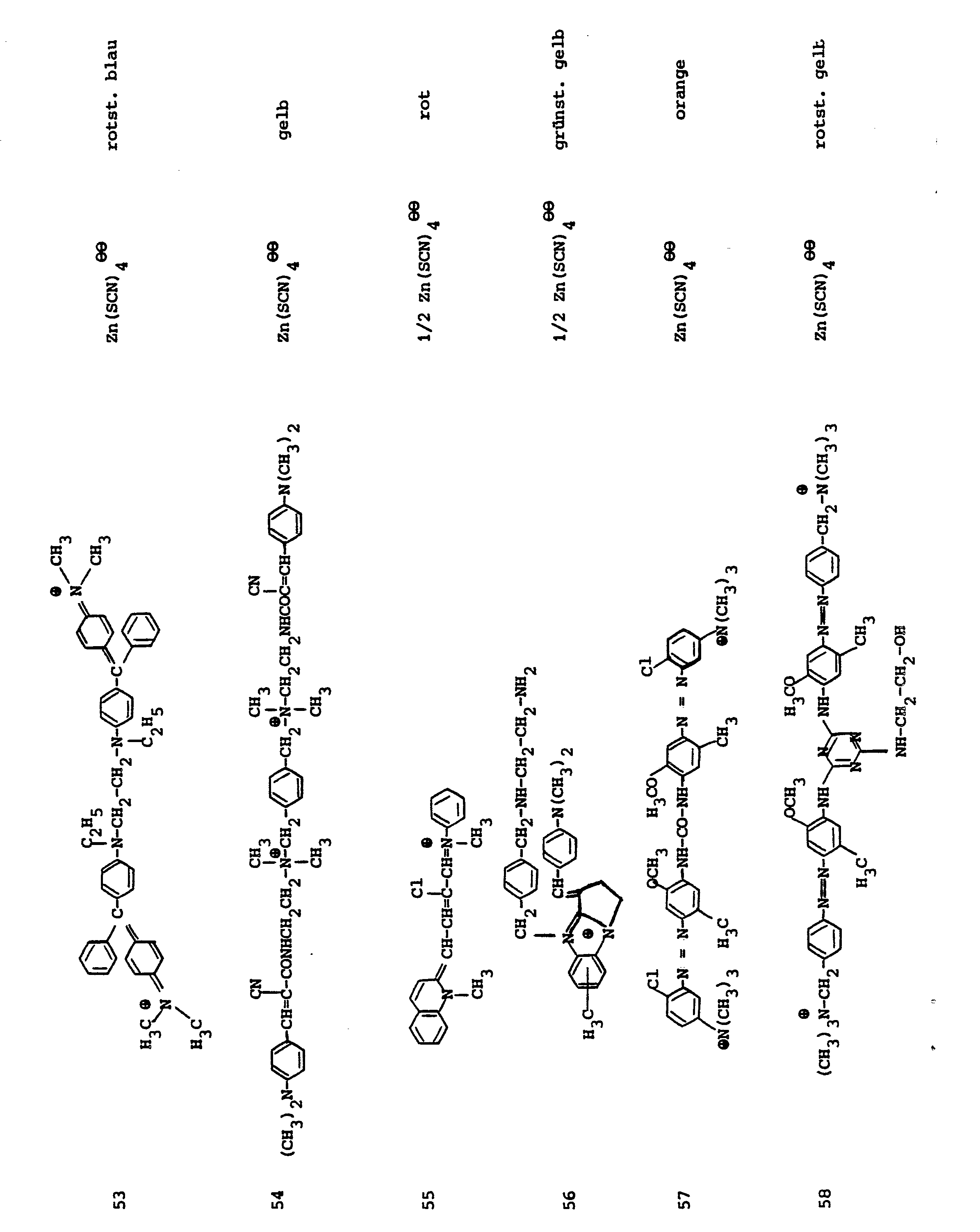

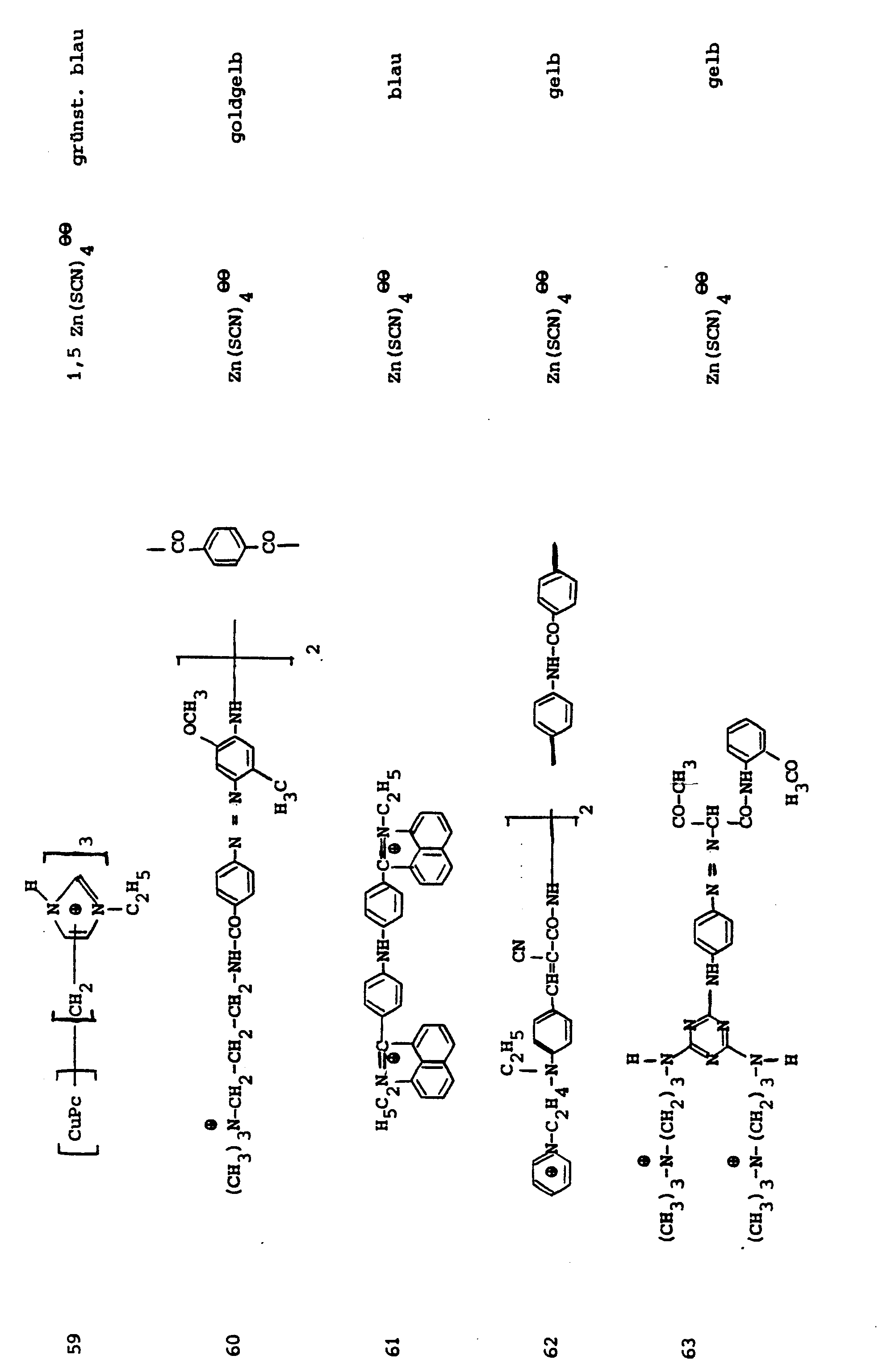

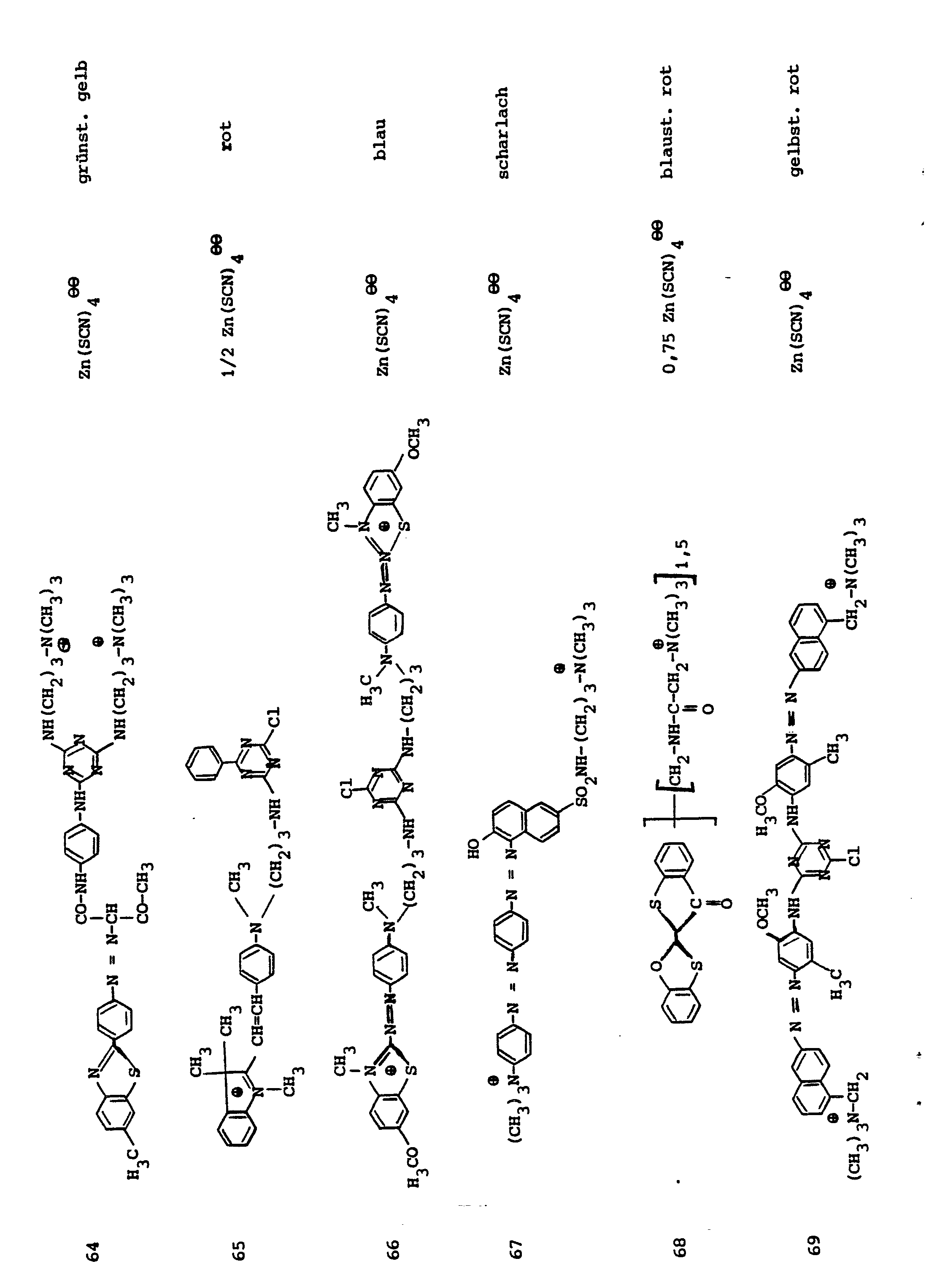

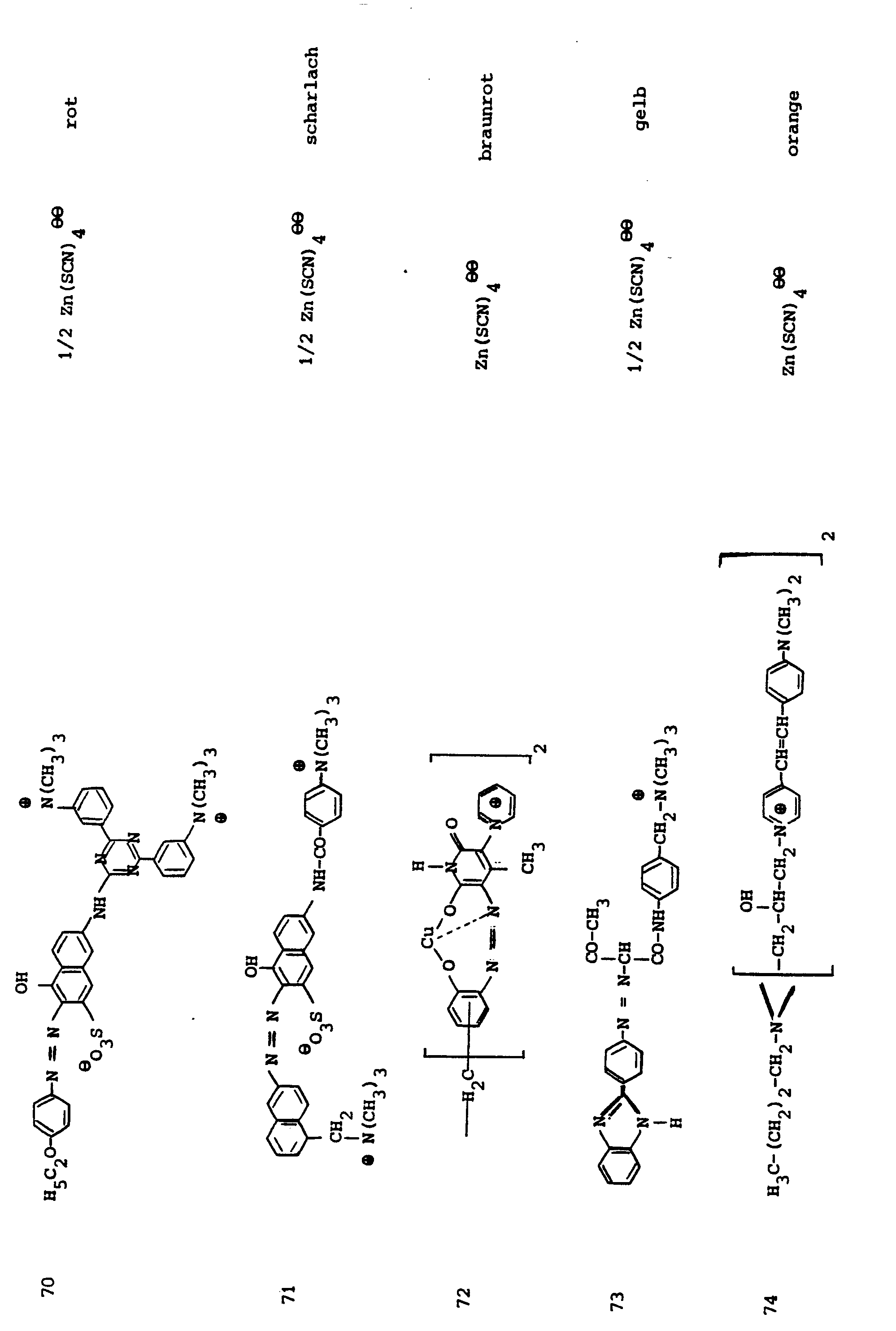

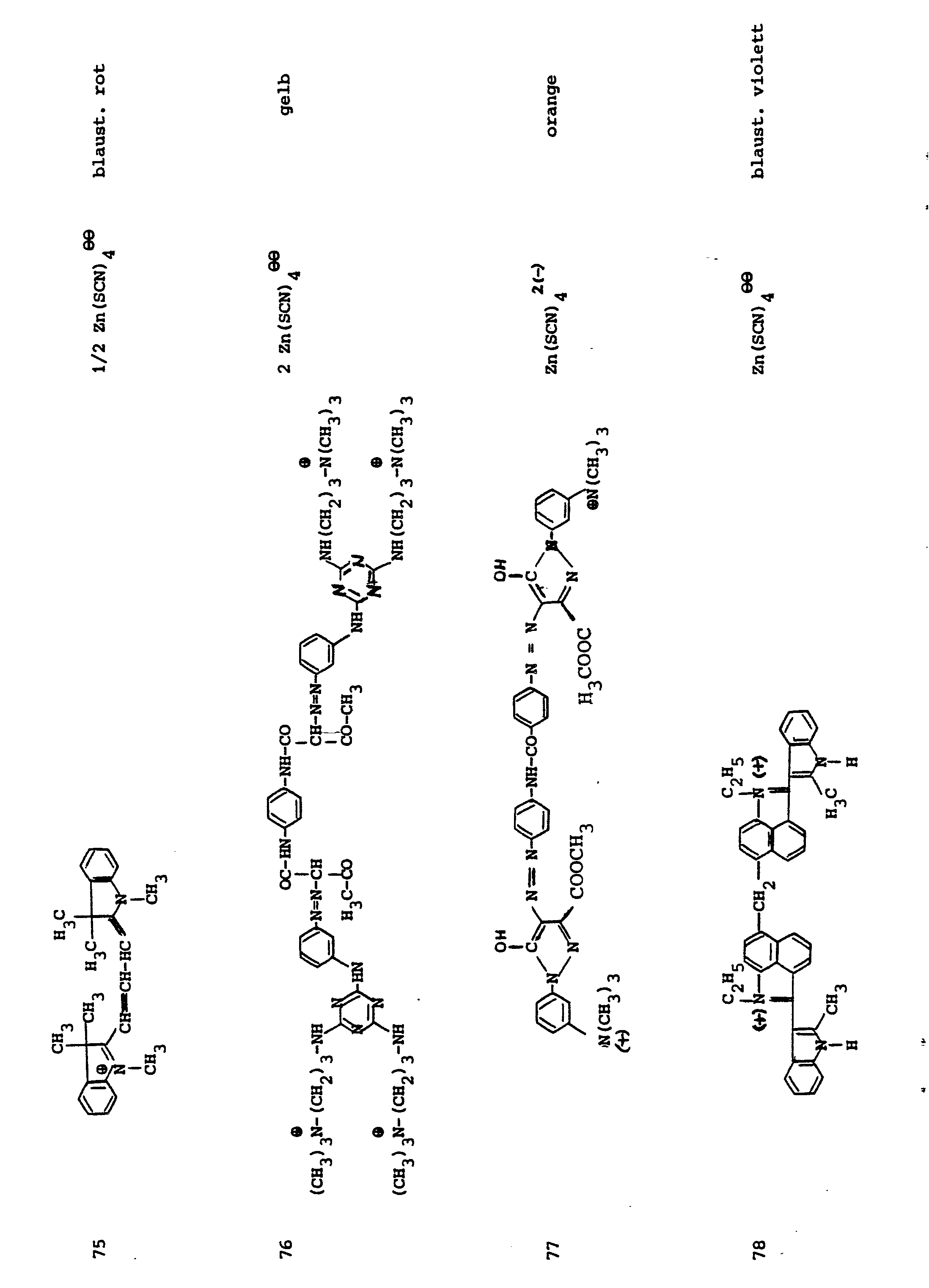

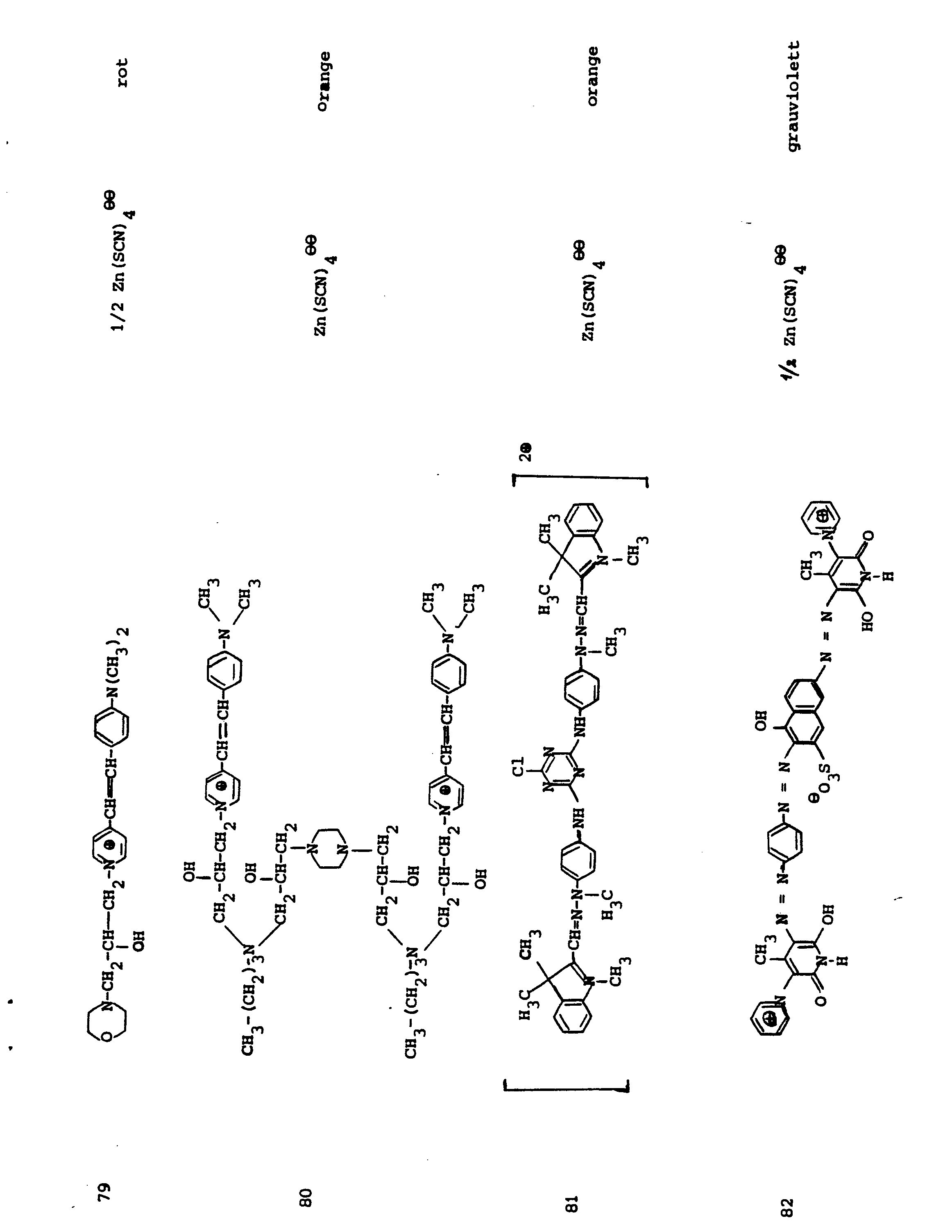

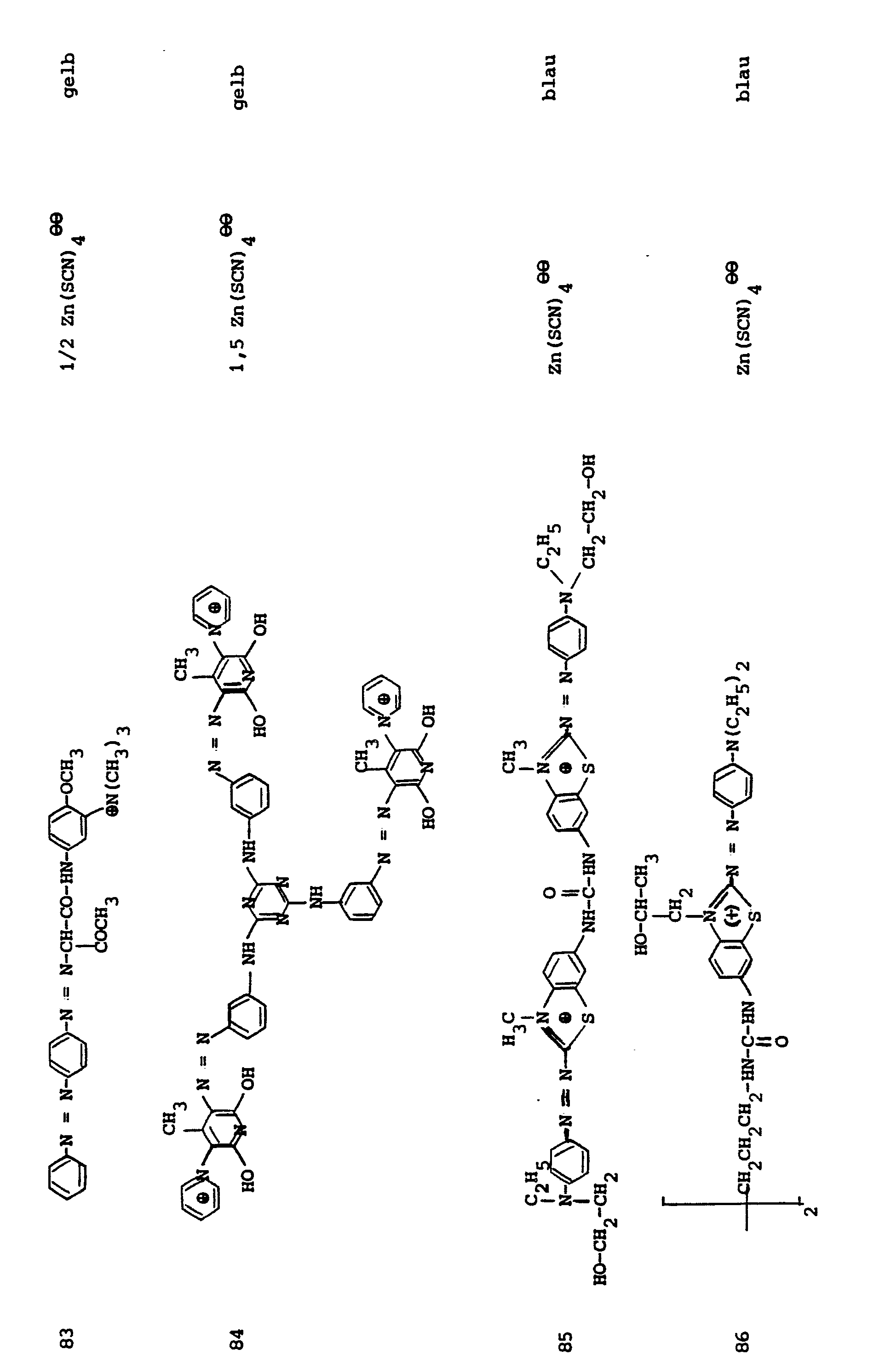

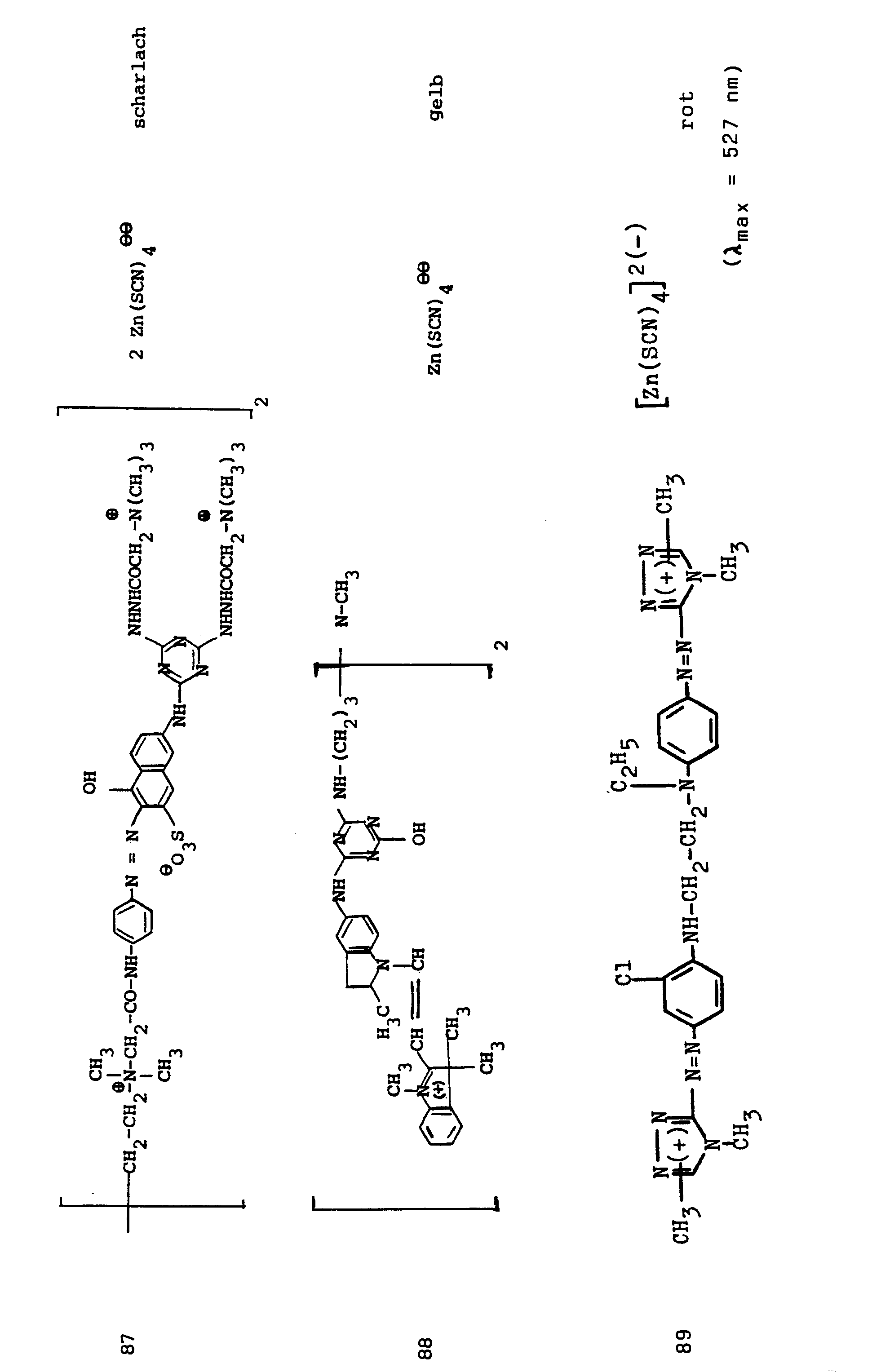

### Anwendungsbeispiel 1

5 Teile einer 5 %igen Lösung des erfindungsgemäßen Farbsalzes von Beispiel 3 in Dimethylformamid werden mit einer 25 %igen Lösung eines Polymers aus 59 % Acrylnitril, 40 % Vinylidenchlorid und 1 % Natriummethallylsulfonat homogen vermischt. Die rote Spinnlösung wird nach Erwärmen auf 50°C in ein Koagulationsbad aus 65 Vol.-% Dimethylformamid und 35 Vol.-% Wasser versponnen, in einem Streckbad aus 35 Vol.-% Dimethylformamid und 65 Vol.-% Wasser bei einer Temperatur von 80°C verstreckt und anschließend in 90°C heißem Wasser gewaschen. Die Anfärbung des Fällbades beträgt 0,066, die des Streckbades 0,01 und die des Waschbades 0,006 (jeweils optische Dichte). Es werden glänzende leuchtend rot gefärbte Fäden mit hervorragenden Echtheiten erhalten.

### Anwendungsbeispiel 2

100 Teile einer 26 %igen Lösung eines Polymers aus 85 % Acrylnitril, 14,5 % Vinylacetat und 0,5 % Natriummethallylsulfonat in Dimethylacetamid werden bei 70 bis 80°C mit 2 Teilen einer 10%igen Lösung des erfindungsgemäßen Farbsalzes von Beispiel 7 homogen vermischt. Diese Spinnmasse wird über eine 100-Loch-Spinndüse mit einem Lochdurchmesser von 100 µm in ein Koagulationsbad aus 70 % Dimethylacetamid und 30 % Wasser versponnen, danach in einem Streckbad aus 30 % Dimethylacetamid und 70 % Wasser bei 80°C verstreckt und in 85 bis 90°C heißem Wasser gewaschen. Die Anfärbung des Fällbades beträgt 0,06, die des Streckbades 0,009 und die des Waschbades 0,005 (jeweils optische Dichte). Es werden rot gefärbte Fäden mit hohem Glanz erhalten, die ein sehr gutes Echtheitsniveau aufweisen.

## Patentansprüche

1. Farbsalz eines mono- oder polykationischen Farbstoffes mit dem Anion entsprechend einer allgemeinen Formel (1) oder (2)
[Me (XCN)₄]²⁽⁻⁾ (1)
[Me (SCN)₆]ⁿ⁽⁻⁾(2)
in welchen
Me in Formel (1) das zweiwertige Zink-Kation, das zweiwertige Eisen-Kation, das zweiwertige Kobalt-Kation, das zweiwertige Zinn-Kation oder das zweiwertige Kupfer-Kation ist und
Me in Formel (2) für das zweiwertige Eisen-Kation, das zweiwertige Nickel-Kation oder das dreiwertige Eisen-Kation steht,
X ein Sauerstoffatom oder ein Schwefelatom ist und
n abhängig von der Wertigkeit des entsprechenden Metall-Kations die Zahl 4 oder 3 bedeutet.

2. Farbsalz nach Anspruch 1, dadurch gekennzeichnet, daß das Anion das Tetrarhodano-Zincat-Anion ist.

3. Verbindung nach Anspruch 1 der Formel

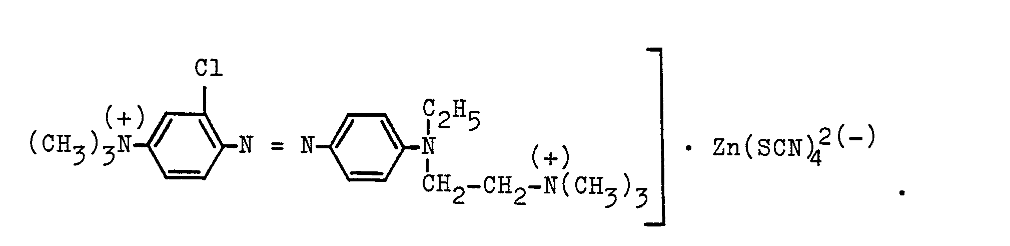

4. Verbindung nach Anspruch 1 der Formel

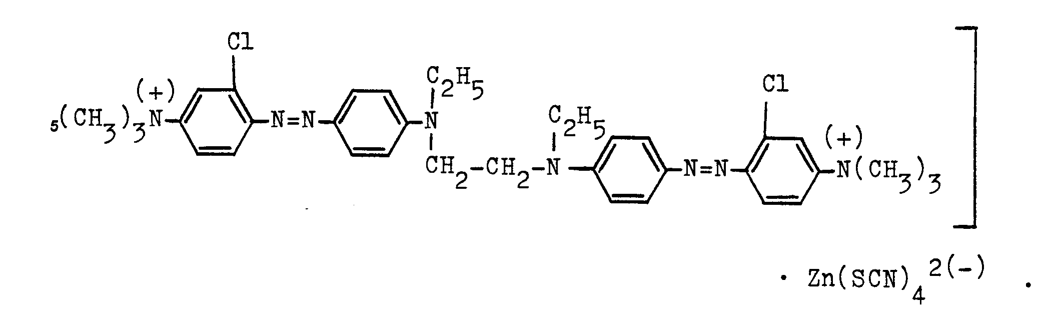

5. Verbindung nach Anspruch 1 der Formel

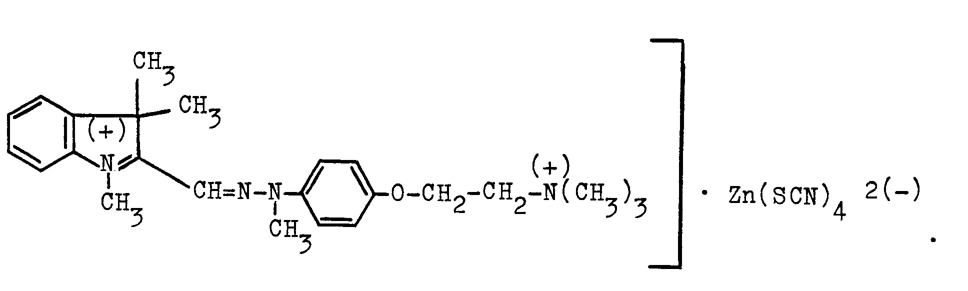

6. Verbindung nach Anspruch 1 der Formel

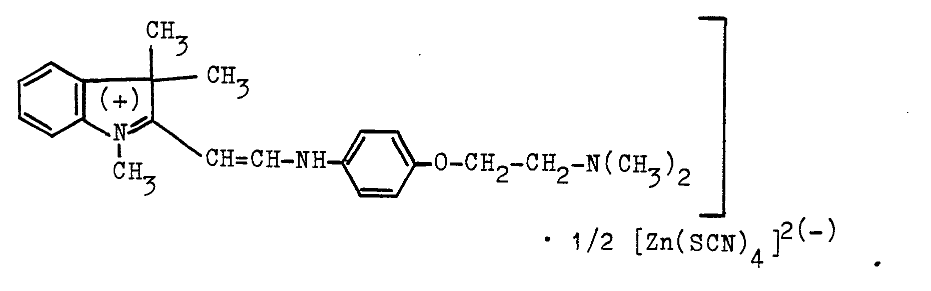

7. Verbindung nach Anspruch 1 der Formel

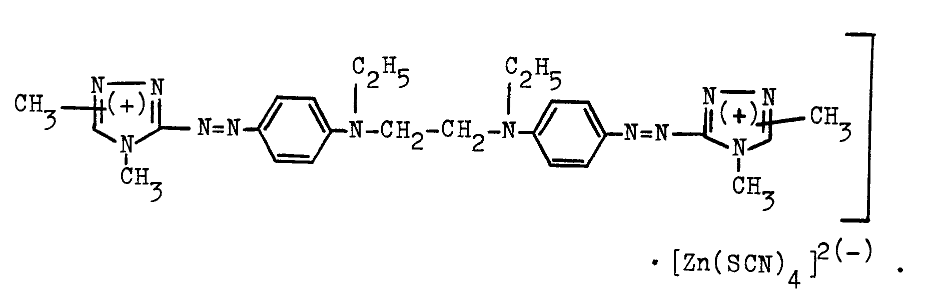

8. Verbindung nach Anspruch 1 der Formel

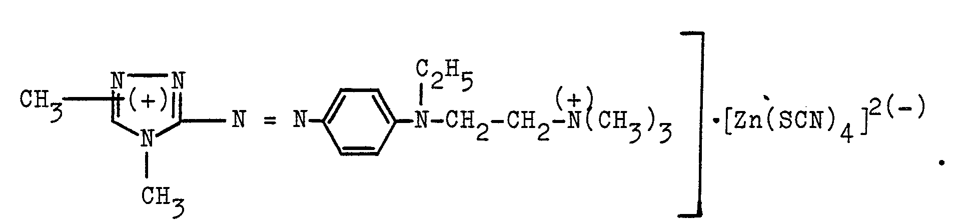

9. Verbindung nach Anspruch 1 der Formel 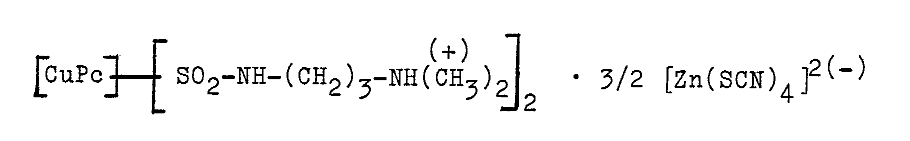
in welcher CuPc den Kupferphthalocyaninrest bedeutet.

10. Verbindung nach Anspruch 1 der Formel

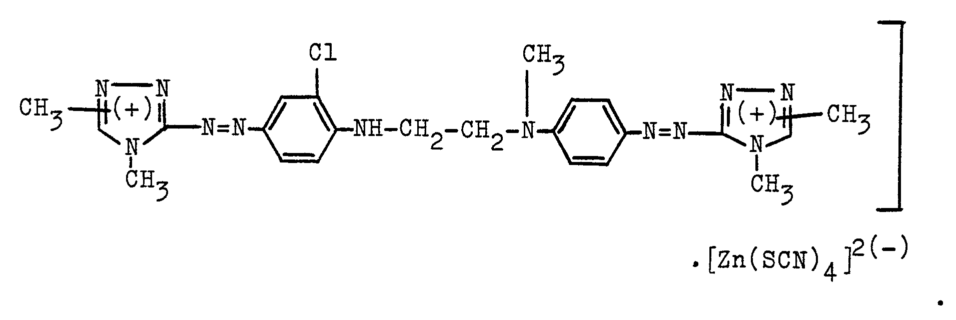

11. Verbindung nach Anspruch 1 der Formel 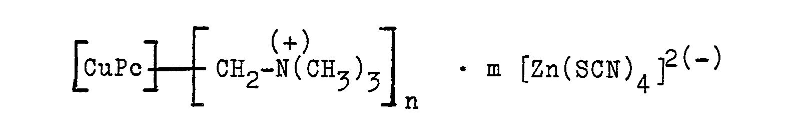
in welcher CuPc den Kupferphthalocyaninrest bedeutet, n eine Zahl zwischen 2 und 3 ist und m für eine Zahl zwischen 1 und 1,5 steht.

12. Verfahren zur Herstellung eines Farbsalzes von Anspruch 1, dadurch gekennzeichet, daß man einen kationischen Farbstoff mit einem üblichen Anion in wäßriger Lösung oder Suspension mit einer Verbindung, die ein Metallkation Me der in Anspruch 1 definierten Bedeutung abgibt, und mit einem Alkalimetall- oder Erdalkalimetall- oder Ammoniumrhodanid bzw. Alkalimetall- oder Erdalkalimetall- oder Ammoniumcyanat bei einer Temperatur zwischen 0°C und 100°C und einem pH-Wert zwischen 2 und 6 umsetzt.

13. Verfahren zur Gewinnung von Farbsalzen von kationischen Farbstoffen in reiner Form, dadurch gekennzeichnet, daß man einen kationischen Farbstoff mit einem üblichen Anion in wäßriger Lösung oder Suspension mit einer Verbindung, die ein Metallkation Me der in Anspruch 1 definierten Bedeutung abgibt, und mit einem Alkalimetall- oder Erdalkalimetall- oder Ammoniumrhodanid bzw. Alkalimetall- oder Erdalkalimetall- oder Ammoniumcyanat bei einer Temperatur zwischen 0°C und 100°C und einen pH-Wert zwischen 2 und 6 umsetzt und das ausgefallene Farbsalz isoliert.

14. Verfahren nach Anspruch 12 oder 13, dadurch gekennzeichner, daß die Reaktionstemperatur zwischen 0°C und 60°C liegt.

15. Verfahren nach Anspruch 12 oder 13, dadurch gekennzeichnet, daß man die Umsetzung bei einem pH-Wert zwischen 2,5 und 4,5 durchführt.

16. Verfahren nach mindestens einem der Ansprüche 12 bis 15, dadurch gekennzeichnet, daß man von einem kationischen Farbstoff mit dem Tetrachlorozincat-Anion ausgeht und dieses in wäßriger Lösung mit dem Alkalimetall- oder Erdalkalimetall-oder Ammoniumrhodanid bzw. Alkalimetall- oder Erdalkalimetall- oder Ammoniumcyanat umsetzt.

17. Verwendung eines Farbsalzes von Anspruch 1 oder eines nach einem der Ansprüche 12 bis 16 hergestellten Farbsalzes zum Spinnfärben von sauer modifiziertem Polyacrylnitril oder sauer modifizierten Mischpolymeren des Acrylnitrils.

18. Verfahren zum Spinnfärben von sauer modifiziertem Polyacrylnitril oder sauer modifizierten Mischpolymeren des Acrylnitrils, insbesondere in der Naßspinnfärbeweise, dadurch gekennzeichnet, daß man als Farbmittel ein in Anspruch 1 genanntes und definiertes Farbsalz einsetzt.
